# EUROPEAN PATENT APPLICATION

(11) **EP 3 171 602 A1**
(43) Date of publication of application: **24.05.2017**
(21) Application number: 15822663.9
(22) Date of filing: 06.07.2015
(51) Int. Cl.: H04N 21/2343, H04N 21/258, H04N 21/41, H04N 21/4728

(54) **INFORMATION PROCESSING DEVICE, DISPLAY DEVICE, INFORMATION PROCESSING METHOD, PROGRAM, AND INFORMATION PROCESSING SYSTEM**

(30) Priority: 18.07.2014 JP 2014147598
(71) Applicant: Sony Corporation, Tokyo 108-0075 (JP)
(72) Inventor: MASUDA Tooru, Tokyo 108-0075 (JP)
(74) Representative: Witte, Weller & Partner Patentanwälte mbB
(86) International application number: PCT/JP2015/069381
(87) International publication number: WO 2016/009864

(57) **Abstract**

The present technology relates to an information processing device, a display device, an information processing method, a program, and an information processing system that enable the determination of a visual field of attention in a case where an image of content in which the visual field can be freely changed is exhibited to a user.

An information processing device according to one aspect of the present technology receives viewing history information including a history of a display range of each video content while being viewed, which viewing history information is transmitted from a plurality of display devices each configured to display an image of the video content in which the display range is switched within a range of the entire image by following a movement of a user, and identifies, on the basis of the history of the display range of the image of the video content at the predetermined display device, a predetermined display range of the video content within a predetermined time period thereof as a range of attention. The present technology can be applied to a device that provides content to be reproduced by an HMD.

## Description

### TECHNICAL FIELD

The present technology relates to an information processing device, a display device, an information processing method, a program, and an information processing system. In particular, the present technology relates to an information processing device, a display device, an information processing method, a program, and an information processing system configured so as to be able to determine a visual field of attention in a case where an image of content in which the visual field can be freely changed is exhibited to a user.

### BACKGROUND ART

In recent years, various types of technologies have been proposed, in which technologies a sensor for head tracking is equipped in a head mounted display (HMD) such that a display range of an image is switched in real time depending on the attitude of the head of a user, thereby giving a user an experience as if being in another space.

As the content for the HMD, for example, an image with an angle of view of 360 degrees generated by combining images actually captured with a plurality of video cameras and an image by computer graphics (CG) with an angle of view of 360 degrees are used. Actually, out of the entire angle of view of 360 degrees, a user watches a portion of a range of an image in accordance with a viewing angle of a display device provided in the HMD.

### CITATION LIST

### PATENT DOCUMENT

Patent Document 1: Japanese Patent Application Laid-Open No. 2014-41502

### SUMMARY OF THE INVENTION

### PROBLEMS TO BE SOLVED BY THE INVENTION

For example, when an image of a sports event is viewed, an image of play selected on a side of a program creator is displayed in the case of a usual television program and thus, the user simply watches that image. In contrast to this, when the visual field can be freely changed, the user is required to determine by him/herself where to watch.

Consequently, it is considered that the user sometimes fails to easily decide where to watch in some content.

The present technology has been made by taking such a situation in consideration and an object thereof is to enable the determination of a visual field of attention in a case where an image of content in which the visual field can be freely changed is exhibited to a user.

### SOLUTIONS TO PROBLEMS

An information processing device according to one aspect of the present technology includes a communication unit that receives viewing history information including a history of a display range of each video content while being viewed, which viewing history information is transmitted from a plurality of display devices each configured to display an image of the video content in which the display range is switched within a range of the entire image by following a movement of a user, and an identification unit that identifies, on the basis of the history of the display range of the image of the video content at the predetermined display device, a predetermined display range of the video content within a predetermined time period thereof as a range of attention.

A display device according to another aspect of the present technology includes a reproducing unit that reproduces video content in which a display range is switched within a range of the entire image by following a movement of a user, a detection unit that detects the movement of the user while viewing the video content, a display control unit that controls the display range of an image by following the movement of the user, and a communication unit that transmits viewing history information including a history of the display range of the video content while being viewed to an information processing device configured to process the viewing history information transmitted from the plurality of display devices and, on the basis of the history of the display range of the image of the video content at the predetermined display device, identify a predetermined display range of the video content within a predetermined time period thereof as a range of attention.

### EFFECTS OF THE INVENTION

According to the present technology, it is possible to determine a visual field of attention in a case where an image of content in which the visual field can be freely changed is exhibited to a user.

Note that, the effects described herein are not necessarily limited and any effects described in the present disclosure may be applied.

### BRIEF DESCRIPTION OF DRAWINGS

Fig. 1 is a diagram illustrating an exemplary configuration of a content delivery system according to an embodiment of the present technology.
Fig. 2 is a plan view illustrating an exemplary imaging space of free-viewpoint content.
Fig. 3 is a diagram illustrating an exemplary angle of view of an image.
Fig. 4 is a diagram illustrating another exemplary angle of view of an image.
Fig. 5 is a diagram illustrating an exemplary captured image.
Fig. 6 is a diagram illustrating an exemplary visual field.
Fig. 7 is a block diagram illustrating an exemplary configuration of a content management server.
Fig. 8 is a block diagram illustrating an exemplary function configuration of the content management server.
Fig. 9 is a diagram illustrating exemplary viewing history information.
Fig. 10 is a diagram illustrating exemplary content information.
Fig. 11 is a block diagram illustrating an exemplary configuration of an HMD.
Fig. 12 is a block diagram illustrating an exemplary function configuration of a control unit.
Fig. 13 is a flowchart for explaining content reproduction processing by a client terminal.
Fig. 14 is a flowchart for explaining recording processing by the content management server.
Fig. 15 is a flowchart for explaining topmost visual field information generation processing by the content management server.
Fig. 16 is a diagram illustrating an example of overlaps between the visual fields.
Fig. 17 is a flowchart for explaining feature point-based topmost visual field information generation processing by the content management server.
Fig. 18 is a flowchart for explaining highlight content delivery processing by the content management server.
Fig. 19 is a diagram illustrating a time series of maximum values of the number of overlaps between the visual fields.
Fig. 20 is a flowchart for explaining other highlight content delivery processing by the content management server.
Fig. 21 is a flowchart for explaining highlight content reproduction processing by the client terminal.
Fig. 22 is a flowchart for explaining other highlight content reproduction processing by the client terminal.
Fig. 23 is a diagram illustrating exemplary presentation of a highlight point.
Fig. 24 is a flowchart for explaining content reproduction processing by the client terminal.
Fig. 25 is a flowchart for explaining highlight point presentation processing by the content management server.
Fig. 26 is a flowchart for explaining first highlight point identification processing carried out at step S232 in Fig. 25.
Fig. 27 is a flowchart for explaining second highlight point identification processing carried out at step S232 in Fig. 25.
Fig. 28 is a flowchart for explaining third highlight point identification processing carried out at step S232 in Fig. 25.
Fig. 29 is a flowchart for explaining fourth highlight point identification processing carried out at step S232 in Fig. 25.
Fig. 30 is a flowchart for explaining fifth highlight point identification processing carried out at step S232 in Fig. 25.
Fig. 31 is a diagram illustrating exemplary HMDs.

### MODE FOR CARRYING OUT THE INVENTION

Hereinafter, modes for carrying out the present technology will be described. The description will be given in the following order.
1. First Embodiment (an example of delivering highlight content)
2. Second Embodiment (an example of presenting a highlight point)

### <<First Embodiment>>

### <Configuration of Content Delivery System>

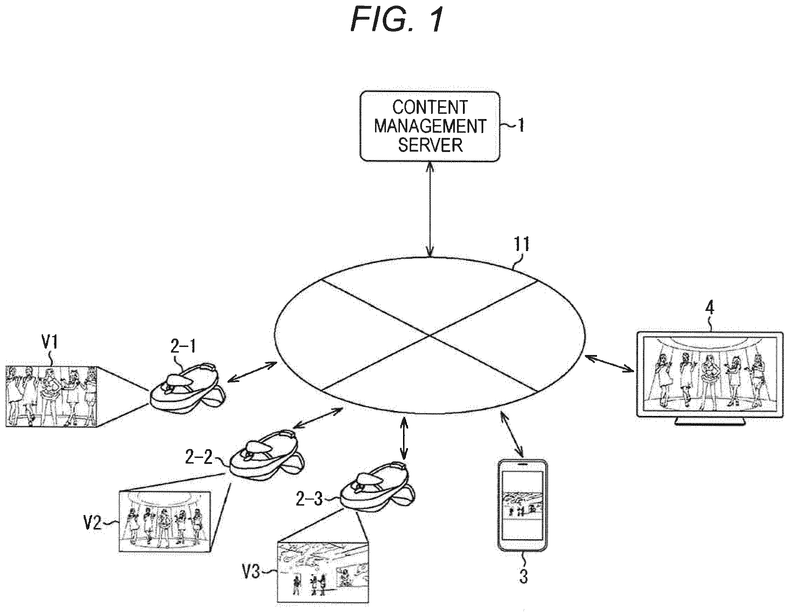

Fig. 1 is a diagram illustrating an exemplary configuration of a content delivery system according to an embodiment of the present technology.

The content delivery system in Fig. 1 is constituted by a content management server 1, HMDs 2-1 to 2-3, a portable terminal 3, and a television receiver 4. Each of the HMDs 2-1 to 2-3, the portable terminal 3, and the television receiver 4 is connected to the content management server 1 through a network 11 such as the Internet.

When it is not necessary to distinguish the HMDs 2-1 to 2-3, the portable terminal 3, and the television receiver 4 from one another, these members are collectively referred to as client terminals as appropriate. Although Fig. 1 illustrates five client terminals, more terminals are connected to the network 11.

The content management server 1 manages a plurality of items of video content and transmits video content selected by a user of the client terminal. The video content transmitted by the content management server 1 is content having an angle of view of 360 degrees in at least one of a horizontal direction and a vertical direction and including images captured at a plurality of positions.

Upon receiving the video content transmitted from the content management server 1, a user of, for example, the HMD 2-1 can select a viewpoint to view an image from the selected viewpoint while changing a visual field. The video content transmitted by the content management server 1 is so-called free-viewpoint content in which the viewpoint can be changed.

Sensors for head tracking such as an acceleration sensor and a gyro sensor are equipped in each of the HMDs 2-1 to 2-3. Each of the HMDs 2-1 to 2-3 detects an attitude of the head of the user wearing each of the HMDs 2-1 to 2-3 to switch a display range of the image in accordance with a direction of a line of sight estimated from the attitude of the head. As a consequence, out of the entire angle of view of 360 degrees, the user watches a certain portion of a range of the image located in a direction in which the user turns his/her face.

Here, the "viewpoint" serves as a standpoint of the user watching an object. Meanwhile, the "visual field" is a range the user is watching and corresponds to a range of the image displayed on a display (display range). The "line of sight" is a direction of the visual field of the user and corresponds to a direction of the display range of the image when a predetermined direction within an imaging space is assumed as a reference.

Hereinafter, a case where an image of the free-viewpoint content transmitted by the content management server 1 is assumed as an image of a concert in which a plurality of singers plays will be described. Various types of the free-viewpoint content can be configured to be transmitted from the content management server 1, including an image of a drama, an image of sports, an image of a tourist site, or a CG image.

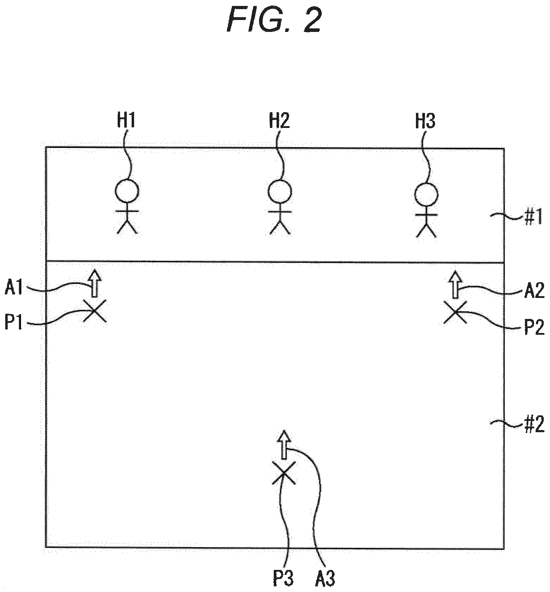

Fig. 2 is a plan view illustrating an exemplary concert venue serving as the imaging space of the free-viewpoint content.

A stage #1 is provided in the concert venue and an audience floor #2 is provided ahead of the stage #1 (a lower side in Fig. 2). Three singers, specifically, persons H1, H2, and H3 are on the stage #1. In addition, the audience floor #2 is assumed to be filled with a large audience. An entire scene in the concert venue is regarded as an object.

Positions P1 to P3 represent image capturing positions. A camera capable of capturing an image with an angle of view of 360 degrees in at least one of the horizontal direction and the vertical direction is installed at each of the positions P1 to P3. A plurality of cameras having image capturing ranges different from one another may be configured to be installed at the respective image capturing positions such that images captured by these plurality of cameras are combined to generate an image with an angle of view of 360 degrees in which the positions P1 to P3 serve as the image capturing positions.

Outline arrows A1 to A3 represent reference directions at the locations of the positions P1 to P3, respectively. In the example in Fig. 2, a direction of the stage #1 is assumed as the reference direction.

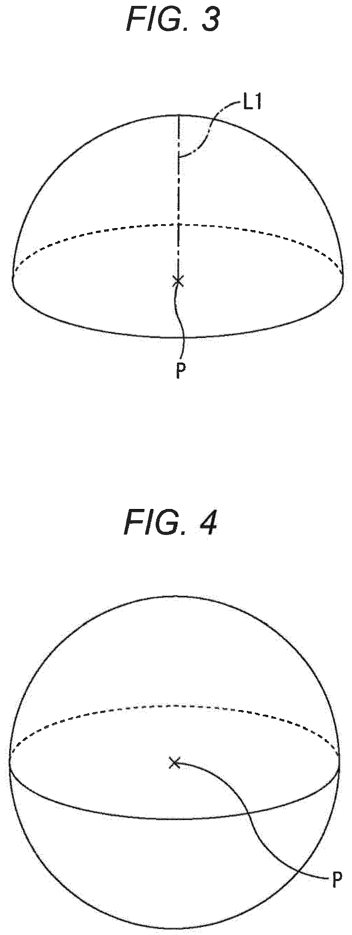

Fig. 3 is a diagram illustrating an exemplary angle of view of the image captured at each of the positions P1 to P3.

For example, when a wide angle lens is turned to the right above to capture an image at each of the positions P1 to P3, as illustrated in Fig. 3, an image is captured within a range having a half celestial sphere shape in which an optical axis L1 indicated by a one-dot chain line and the zenith intersect with each other. The angle of view in Fig. 3 is regarded as an angle of view of 360 degrees in the horizontal direction and 180 degrees in the vertical direction.

As illustrated in Fig. 4, an image within a range having an entire celestial sphere shape in which the angle of view of 360 degrees in both of the horizontal direction and the vertical direction is obtained may be configured to be captured at each of the positions P1 to P3. Here, when expressed with latitude and longitude by using equidistant cylindrical projection, the image within the range having the entire celestial sphere shape is sometimes expressed as 360 degrees in the horizontal direction and 180 degrees in the vertical direction. However, in order to distinguish this range from the range having the half celestial sphere shape in Fig. 3, the angle of view in this case is here described as 360 degrees in both of the horizontal direction and the vertical direction.

Hereinafter, for convenience of description, a case where the image captured at each of the positions P1 to P3 is regarded as the image within the range having the half celestial sphere shape illustrated in Fig. 3 will be described.

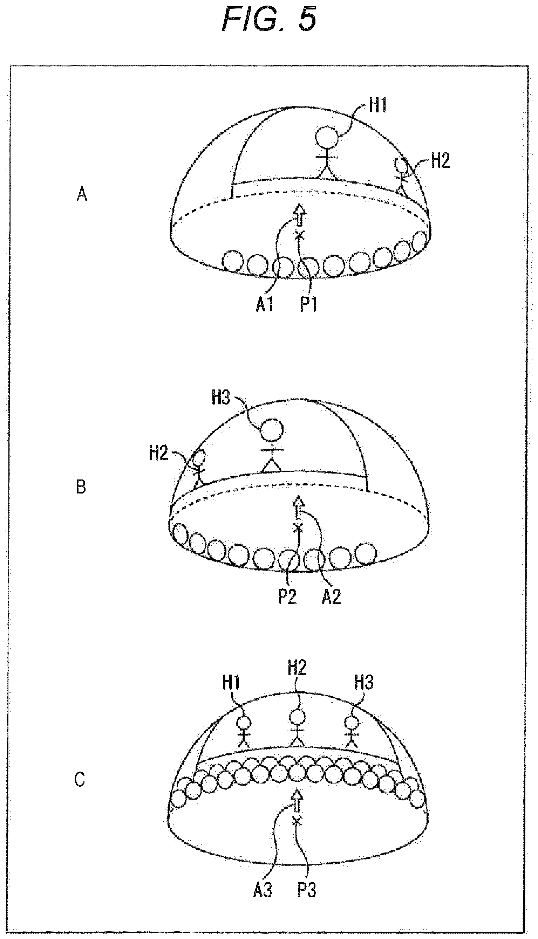

A to C of Fig. 5 are diagrams illustrating exemplary images captured at the positions P1 to P3, respectively.

Each of half celestial spheres in A to C of Fig. 5 represents an entire image of one frame of a video taken at each of the positions P1 to P3.

As illustrated in A of Fig. 5, a video is taken at the position P1, in which a large image of the person H1 is located in the direction of the stage #1 indicated by the outline arrow A1 and an image of the person H2 smaller than that of the person H1 is located on the right side of the person H1. Naturally, a still smaller image of the person H3 is located on the right side of the person H2. An image of the audience facing the direction of the stage #1 is located in an opposite direction of the stage #1.

As illustrated in B of Fig. 5, a video is taken at the position P2, in which a large image of the person H3 is located in the direction of the stage #1 indicated by the outline arrow A2 and an image of the person H2 smaller than that of the person H3 is located on the left side of the person H3. Naturally, a still smaller image of the person H1 is located on the left side of the person H2. An image of the audience facing the direction of the stage #1 is located in an opposite direction of the stage #1.

As illustrated in C of Fig. 5, a video is taken at the position P3, in which an image of the entire stage #1 is located on a depth side of the direction indicated by the outline arrow A3 and a back image of the audience facing the direction of the stage #1 is located before the stage #1.

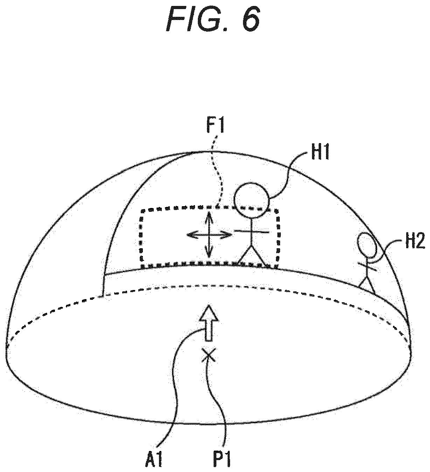

Fig. 6 is a diagram illustrating an exemplary visual field at the position P1.

A range of a frame F1 indicated by a dashed line on a spherical surface in Fig. 6 represents the display range of, for example, the HMD 2-1, namely, the visual field of the user of the HMD 2-1. A picture within a range indicated by the frame F1 is cut out from each of the frames at the HMD 2-1 so as to be displayed as a video.

The position of the frame F1 is shifted as the user moves his/her head as indicated by an arrow and accordingly, a range displayed on a display of the HMD 2-1 is also switched. Note that the shape and the size of the frame representing a range of the visual field are changed depending on an aspect ratio and a viewing angle of a display included in each of the client terminals.

Here, the visual field of the user is identified through the location of the position P1 in the imaging space (coordinates), the direction of the frame F1 relative to the reference direction, and the angle of view of the frame F1. It is accordingly possible for the content management server 1 to identify the visual field of the user on the basis of the position of the viewpoint selected by the user, the direction of the line of sight detected by the HMD 2-1 while the free-viewpoint content is reproduced, and the angle of view of the display included in the HMD 2-1.

Note that, although the number of viewpoints is assumed as three in the description here, the number of viewpoints may be one, or alternatively, may be four or more. A video stream of images captured from one viewpoint or a plurality of viewpoints are included in the free-viewpoint content delivered by the content management server 1. The video stream to be reproduced at the client terminal is switched in accordance with the viewpoint selected by the user. The viewpoint is deemed as being able to be switched while the video stream from a certain viewpoint is reproduced.

In addition, fully free-viewpoint content generated by combining images captured from a plurality of positions may be employed to be delivered from the content management server 1. The fully free-viewpoint content is content in which an arbitrary position within the imaging space can be selected as the viewpoint.

Returning to the description of Fig. 1, the HMDs 2-1 to 2-3 receive the free-viewpoint content transmitted from the content management server 1. For example, the free-viewpoint content transmitted by the content management server 1 includes content providing an image of a concert in real time. Also the users of the HMDs 2-1 to 2-3 can watch a scene substantially the same as a scene the audience in the concert venue is watching.

Each of the HMDs 2-1 to 2-3 reproduces the free-viewpoint content and displays an image from the viewpoint selected by the user on a built-in display. Each of the HMDs 2-1 to 2-3 is a so-called immersive HMD and provided with a display at a position where the image is projected in front of the eye of the user wearing a main body thereof.

Each of the HMDs 2-1 to 2-3 detects the attitude of the head of the user while the free-viewpoint content is reproduced to switch the display range of the image in accordance with the attitude of the head.

As described with reference to Fig. 6, for example, when the user turns his/her face to the right, each of the HMDs 2-1 to 2-3 shifts the position of the display range of the image to the right direction while keeping the position of the viewpoint as it is and, when the user turns his/her face to the left, shifts the position of the display range of the image to the left direction while keeping the position of the viewpoint as it is. Likewise, when the user turns his/her face to above, each of the HMDs 2-1 to 2-3 shifts the position of the display range of the image to an upper direction while keeping the position of the viewpoint as it is and, when the user turns his/her face to below, shifts the position of the display range of the image to a lower direction while keeping the position of the viewpoint as it is. For example, when the user inclines his/her head to the right, each of the HMDs 2-1 to 2-3 rotates the display range of the image to the right while keeping the position of the viewpoint and the direction of the line of sight as they are and, when the user inclines his/her head to the left, rotates the display range of the image to the left while keeping the position of the viewpoint and the direction of the line of sight as they are.

In the example in Fig. 1, the users of the HMDs 2-1 to 2-3 are assumed to view images V1 to V3, respectively, serving as images in the visual fields different from one another.

In addition, the HMDs 2-1 to 2-3 cyclically transmit visual field information, specifically, information on the visual field of the user at each time point, to the content management server 1 while the free-viewpoint content is reproduced. The visual field information may be configured to be transmitted at a predetermined timing, for example, after the reproduction of the free-viewpoint content is completed.

Likewise, the portable terminal 3 also receives the free-viewpoint content transmitted from the content management server 1 to reproduce and displays the image from the viewpoint selected by the user on a display provided on a surface of a cabinet thereof.

Additionally, the portable terminal 3 detects the attitude of the cabinet of the portable terminal 3 while the free-viewpoint content is reproduced to switch the display range of the image in accordance with the detected attitude. The user of the portable terminal 3 moves his/her hand in which the portable terminal 3 is carried to change the attitude of the cabinet, thereby being able to display an image he/she wishes to watch.

Also in a case where the portable terminal 3 serves as a smartphone or a tablet terminal, the sensors such as the gyro sensor and the acceleration sensor used for detecting the attitude thereof are equipped therein. The display range of the image may be configured to be switched in accordance with touch operation by detecting the touch operation through a touch panel provided on top of the display.

The portable terminal 3 transmits the visual field information to the content management server 1 while the free-viewpoint content is reproduced.

As described above, in the content delivery system in Fig. 1, the free-viewpoint content is reproduced in such a manner that the image in the visual field preferred by the user of each of the client terminals is displayed. In the content management server 1, information indicating what visual field has been used when the user of each of the client terminals has watched the image is managed.

On the basis of the visual field information transmitted from the plurality of client terminals, the content management server 1 identifies a time period of attention in the free-viewpoint content and at the same time, identifies a visual field of attention.

For example, the content management server 1 finds out the number of overlaps between the visual fields on a visual field basis at each time point and identifies a time period with a large maximum value of the number of overlaps as the time period of attention.

When the image of the concert as described above is reproduced at the respective client terminals, a time period during which the persons H1 to H3 are appearing on the stage #1 marks the increased number of overlaps between the visual fields for a reason that the respective users watch ranges similar to one another. Meanwhile, after the persons H1 to H3 appeared, the visual fields of the respective users are separated to the favorite persons of the respective users. For example, when there is a range watched by 5000 users or more in an overlapping manner out of 10000 users, a time period with such a range is identified as the time period of attention.

Furthermore, the content management server 1 identifies the visual field with the largest number of overlaps between the visual fields within the time period of attention as the visual field of attention. In the content management server 1, the visual field watched by the largest number of the users is identified on a unit time basis within the time period during which many users pay attention to the same range.

The content management server 1 connects the images in the identified visual field of attention within the identified time period of attention out of the entire free-viewpoint content, thereby generating highlight content. When the transmission of the highlight content of certain free-viewpoint content is requested by the user of, for example, the television receiver 4, the content management server 1 transmits the generated highlight content to the television receiver 4.

The television receiver 4 receives the highlight content to reproduce and displays the image of the highlight content on a display. As a consequence, the user of the television receiver 4 watches the image in the visual field that has been watched by the largest number of other users within the time period during which many other users have paid attention to the same range.

In contrast to the HMD 2-1 to 2-3 and the portable terminal 3 serving as appliances capable of switching the visual field in accordance with the attitudes of the main bodies thereof, the television receiver 4 is assumed here as an appliance incapable of switching the visual field.

As described above, the content management server 1 is able to determine the time period of attention and the visual field of attention for the free-viewpoint content on the basis of a history of the visual fields of the plurality of users who have viewed that free-viewpoint content. It is possible for a creator of the free-viewpoint content to produce the highlight content without carrying out editing operation by him/herself.

When the free-viewpoint content is viewed, because the viewpoint and the visual field can be changed to arbitrary positions, the user sometimes hesitates to decide where to pay attention to view. In a case where the highlight content is provided, the user can watch the image by using the viewpoint and the visual field similar to those of many other users and accordingly no longer hesitates to decide a way to view.

In addition, the highlight content may be configured to be transmitted to the HMDs 2-1 to 2-3 or the portable terminal 3 such that the highlight content is viewed by using the HMDs 2-1 to 2-3 or the portable terminal 3.

A series of processing by the respective appliances for generating the above-described highlight content will be described later.

### <Configurations of Respective Appliances>

### • Configuration of Content Management Server

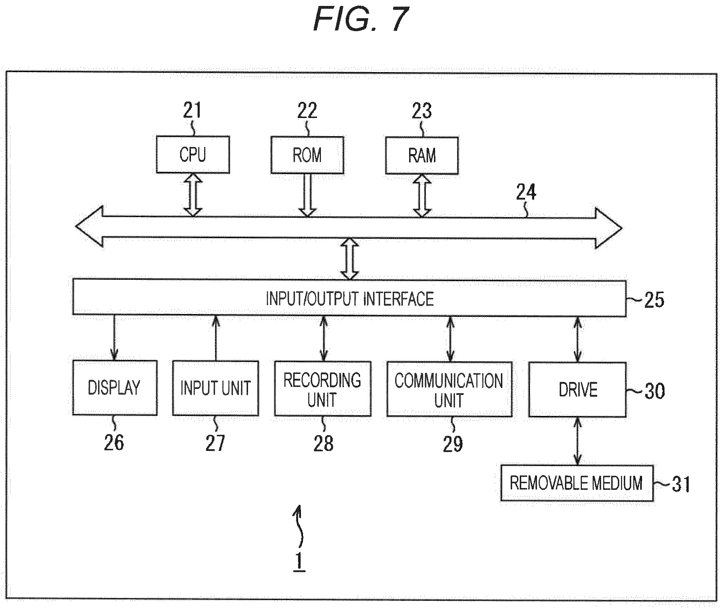

Fig. 7 is a block diagram illustrating an exemplary configuration of the content management server 1.

A central processing unit (CPU) 21, a read only memory (ROM) 22, and a random access memory (RAM) 23 are interconnected through a bus 24.

Additionally, an input/output interface 25 is connected to the bus 24. A display 26 and an input unit 27 are connected to the input/output interface 25. Examples of the input unit 27 include a keyboard and a mouse used by an administrator of the content management server 1.

Meanwhile, a recording unit 28 constituted by a hard disk, a non-volatile memory, or the like and a communication unit 29 serving as a network interface configured to communicate with another appliance through the network 11 are connected to the input/output interface 25. A drive 30 configured to drive a removable medium 31 is also connected to the input/output interface 25.

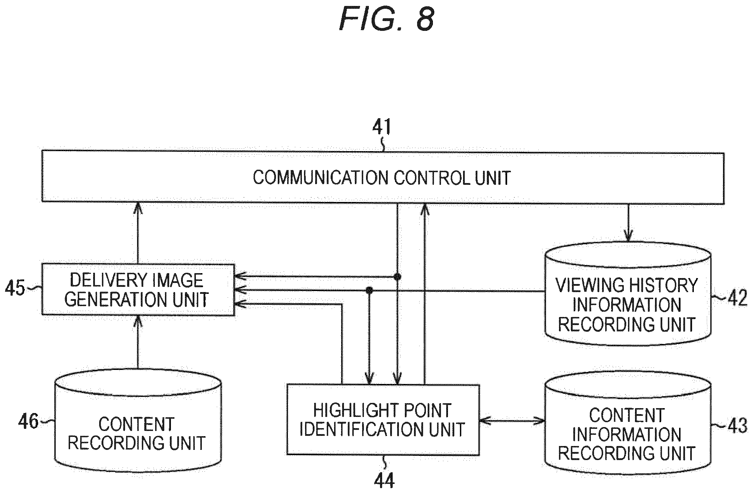

Fig. 8 is a block diagram illustrating an exemplary function configuration of the content management server 1.

At least a portion of function units illustrated in Fig. 8 is realized by the CPU 21 executing a predetermined program. As illustrated in Fig. 8, a communication control unit 41, a viewing history information recording unit 42, a content information recording unit 43, a highlight point identification unit 44, a delivery image generation unit 45, and a content recording unit 46 are realized in the content management server 1. The viewing history information recording unit 42, the content information recording unit 43, and the content recording unit 46 are realized in the recording unit 28.

The communication control unit 41 controls the communication unit 29 to communicate with the client terminal. The communication control unit 41 receives the visual field information transmitted from the client terminal and causes the viewing history information recording unit 42 to record that visual field information therein. In addition, the communication control unit 41 transmits the highlight content generated by the delivery image generation unit 45 to the client terminal.

As will be described later, the content management server 1 is configured to be also capable of presenting a highlight point to the user of the client terminal. In this case, the communication control unit 41 receives, for example, information transmitted from the client terminal regarding the free-viewpoint content for which the highlight point is to be presented and then outputs that information to the highlight point identification unit 44 and the delivery image generation unit 45.

The viewing history information recording unit 42 records viewing history information including time series visual field information which is a time series of the visual field information supplied from the communication control unit 41. The viewing history information regarding a plurality of items of the free-viewpoint content that have been viewed at the respective client terminals is recorded in the viewing history information recording unit 42.

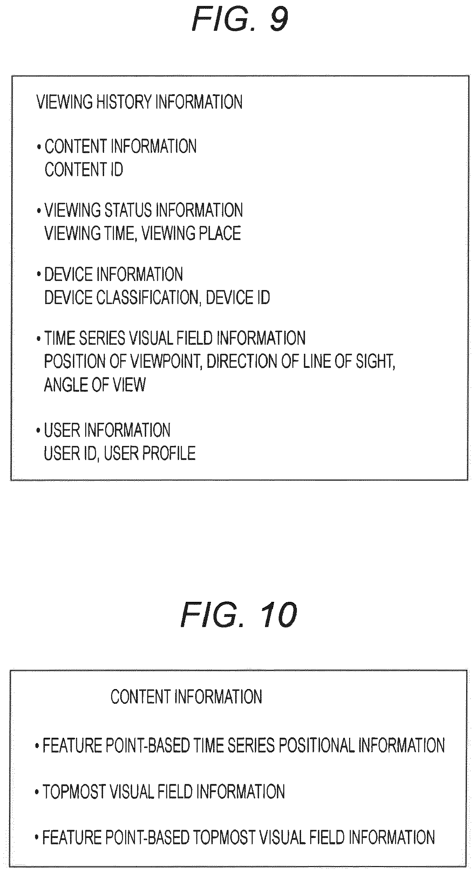

Fig. 9 is a diagram illustrating exemplary viewing history information.

The viewing history information includes content information, viewing status information, device information, the time series visual field information, and user information. For example, every time one item of the free-viewpoint content is reproduced once at a certain client terminal, the viewing history information including the respective pieces of the information illustrated in Fig. 9 is generated.

The content information is identity information on the reproduced free-viewpoint content. The content information includes a content ID.

The viewing status information is information indicating a status of the free-viewpoint content while being reproduced. The viewing status information includes information indicating a viewing time (viewing start time point and viewing end time point) and information indicating a viewing place detected by a positioning sensor or the like provided in the client terminal.

The device information is information indicating the attribute of the client terminal used to reproduce the free-viewpoint content. The device information includes information indicating a device classification which represents a classification of the client terminal such as the HMD, the smartphone, or the television receiver and a device ID serving as identity information on the client terminal.

The time series visual field information is information indicating the visual field at each time point while the free-viewpoint content is reproduced. As described earlier, the visual field of the user is expressed by the position of the viewpoint, the direction of the line of sight, and the angle of view. Particularly, the angle of view may be configured to be identified by the content management server 1 on the basis of the device information transmitted from the client terminal. In this case, information on the angle of view of the display provided in each of the client terminals is prepared in the content management server 1.

The user information is information indicating the attribute of the user who has viewed the free-viewpoint content. The user information includes a user ID and user profile information. The user profile information is information indicating age, sex, hobby, field of expertise, and the like.

As described above, the information indicating the visual field at each time point while the free-viewpoint content is viewed is managed in the content management server 1 by being associated with the information indicating the viewed free-viewpoint content, the information indicating the client terminal used to view the free-viewpoint content, and the information on the user who has viewed the free-viewpoint content.

In addition, the user information may be particularly configured to be managed in the content management server 1 by being associated with the device information instead of being managed as part of the viewing history information.

The viewing history information recorded in the viewing history information recording unit 42 is read by the highlight point identification unit 44 and the delivery image generation unit 45.

The content information recording unit 43 in Fig. 8 records the content information. The content information is prepared for each item of the free-viewpoint content that can be delivered by the content management server 1.

Fig. 10 is a diagram illustrating exemplary content information.

The content information includes feature point-based time series positional information, topmost visual field information, and feature point-based topmost visual field information.

The feature point-based time series positional information is information indicating a position and a rotation direction of each of the feature points within the imaging space at each time point. Examples of the feature point include a person, a portion of the person such as a face, an animal, and a marker which appear on the image. In a case where the image of the free-viewpoint content is an image of a sport using a ball, even the ball is treated as the feature point as well. The position of the feature point is an absolute position relative to a predetermined position serving as a reference within the imaging space, whereas the rotation direction is the orientation of the feature point within the imaging space such as the orientation of the face.

The topmost visual field information is information indicating the most watched visual field at each time point. The topmost visual field information is generated on the basis of the time series visual field information.

The feature point-based topmost visual field information is information indicating the most watched visual field on a feature point basis at each time point. For example, when the respective persons H1 to H3 in Fig. 2 are set as the feature points, the feature point-based topmost visual field information represents which visual field is most used at each time point while each of the persons H1 to H3 is watched. The feature point-based topmost visual field information is generated on the basis of information on the visual field including the feature point.

Among the information included in the content information, the feature point-based time series positional information is prepared by a creator of the free-viewpoint content or the like. The feature point-based time series positional information may be configured to be automatically generated through the analysis of the image of the free-viewpoint content. Meanwhile, the topmost visual field information and the feature point-based topmost visual field information are generated by the highlight point identification unit 44.

On the basis of the viewing history information recorded in the viewing history information recording unit 42, the highlight point identification unit 44 in Fig. 8 generates the topmost visual field information and the feature point-based topmost visual field information included in the content information and then causes the content information recording unit 43 to record these pieces of the information therein.

Meanwhile, the highlight point identification unit 44 reads, from the content information recording unit 43, the content information regarding the free-viewpoint content for which the highlight content is to be generated and then identifies the highlight point on the basis of the content information. The highlight point represents the visual field of attention at each time point during the time period of attention. The highlight point identification unit 44 outputs information indicating the identified highlight point to the delivery image generation unit 45.

In a case where the highlight point is presented to the user of the client terminal, the highlight point identification unit 44 outputs the information indicating the identified highlight point to the communication control unit 41.

The delivery image generation unit 45 delivers the free-viewpoint content to the client terminal. For example, the delivery image generation unit 45 reads the free-viewpoint content from the content recording unit 46 to output to the communication control unit 41 and then causes the communication control unit 41 to transmit the free-viewpoint content to the client terminal that has requested the transmission thereof.

The delivery image generation unit 45 also generates the highlight content. For example, the delivery image generation unit 45 reads the free-viewpoint content from the content recording unit 46 and then connects the images of the highlight points together to generate the highlight content. The delivery image generation unit 45 outputs the generated highlight content to the communication control unit 41 and then causes the communication control unit 41 to transmit the highlight content to the client terminal that has requested the delivery thereof.

The content recording unit 46 records the free-viewpoint content that can be delivered by the content management server 1.

Note that the respective functions realized in the configuration in Fig. 8 can be also configured to be realized by a plurality of servers each taking a share thereof instead of being realized by one server. In this case, the plurality of servers is supposed to carry out respective phases of processing realized by the content management server 1 by individually taking shares thereof.

### • Configuration of HMD

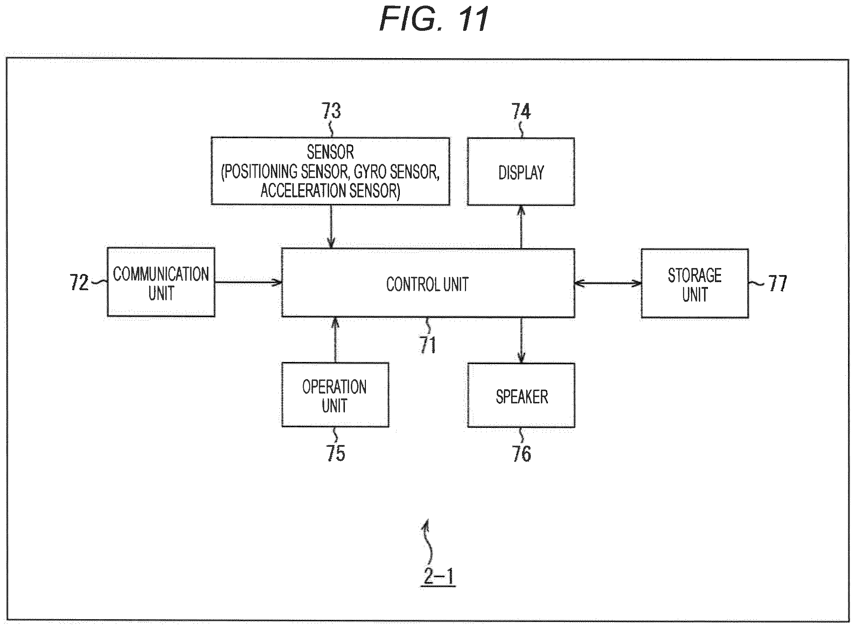

Fig. 11 is a block diagram illustrating an exemplary configuration of the HMD 2-1.

The HMD 2-1 is constituted by a communication unit 72, a sensor 73, a display 74, an operation unit 75, a speaker 76, and a storage unit 77 each connected to a control unit 71. The HMDs 2-2 and 2-3 also have the same configuration as the configuration illustrated in Fig. 11.

The control unit 71 is constituted by a CPU, a ROM, a RAM, and so on. The control unit 71 executes a predetermined program to control an overall action of the HMD 2-1.

The communication unit 72 communicates with the content management server 1 in a wireless manner. The communication unit 72 transmits the visual field information supplied from the control unit 71 to the content management server 1. In addition, the communication unit 72 receives the free-viewpoint content and the highlight content transmitted from the content management server 1 to output to the control unit 71.

The sensor 73 is constituted by a global positioning system (GPS) sensor, a gyro sensor, an acceleration sensor, and so on. The sensor 73 detects positioning, angular velocity, and acceleration while the free-viewpoint content is reproduced and then outputs sensor data to the control unit 71.

The display 74 is constituted by an LCD, an organic EL display, and the like and displays the image of the free-viewpoint content in line with the control of the control unit 71.

The operation unit 75 is constituted by an operation button or the like provided on a surface of a cabinet of the HMD 2-1. The operation unit 75 is used to select the free-viewpoint content, select the viewpoint, and so on.

The speaker 76 outputs audio while the free-viewpoint content is reproduced on the basis of audio data contained in the free-viewpoint content supplied from the control unit 71.

The storage unit 77 is constituted by a flash memory or a memory card inserted in a card slot provided in the cabinet.

The portable terminal 3 also has a configuration fundamentally the same as the configuration illustrated in Fig. 11. In addition, the television receiver 4 also has a configuration fundamentally the same as the configuration illustrated in Fig. 11 except that the sensor 73 is not provided. In the following description, the configuration in Fig. 11 is quoted as the configuration of the portable terminal 3 or the television receiver 4 as appropriate.

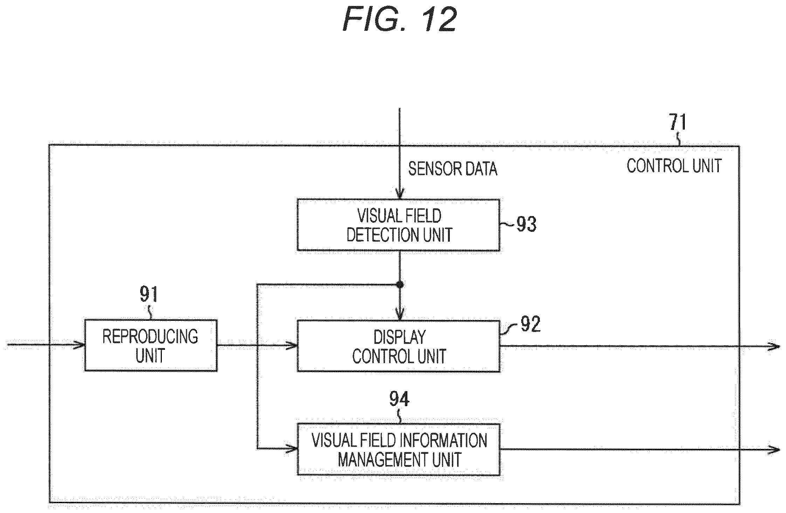

Fig. 12 is a block diagram illustrating an exemplary configuration of the control unit 71.

At least a portion of function units illustrated in Fig. 12 is realized by the CPU of the control unit 71 executing a predetermined program. As illustrated in Fig. 12, a reproducing unit 91, a display control unit 92, a visual field detection unit 93, and a visual field information management unit 94 are realized in the control unit 71. The sensor data output from the sensor 73 is input to the visual field detection unit 93.

The reproducing unit 91 reproduces the free-viewpoint content transmitted from the content management server 1 and then received at the communication unit 72. For example, the reproducing unit 91 decodes the video stream of the image from the viewpoint selected by the user, which is contained in the free-viewpoint content, and then outputs data obtained through decoding to the display control unit 92. The reproducing unit 91 also reproduces the highlight content transmitted from the content management server 1, for example.

On the basis of the data supplied from the reproducing unit 91, the display control unit 92 displays the image of the free-viewpoint content in a predetermined visual field on the display 74. In addition, the display control unit 92 switches the display range of the image in accordance with the visual field detected by the visual field detection unit 93.

On the basis of the sensor data such as the angular velocity and the acceleration, the visual field detection unit 93 identifies the visual field of the user while the free-viewpoint content is reproduced and then outputs information on the visual field to the display control unit 92 and the visual field information management unit 94.

The visual field information management unit 94 outputs the visual field information detected by the visual field detection unit 93 to the communication unit 72 and then causes the communication unit 72 to transmit that visual field information to the content management server 1. The visual field information is transmitted to the content management server 1 after being associated with the content ID, the device ID, the user ID and so on of the free-viewpoint content being reproduced.

### <Actions of Respective Appliances>

Here, the actions of the respective appliances having the above-described configuration will be described.

### • Processing prior to Highlight Content Delivery

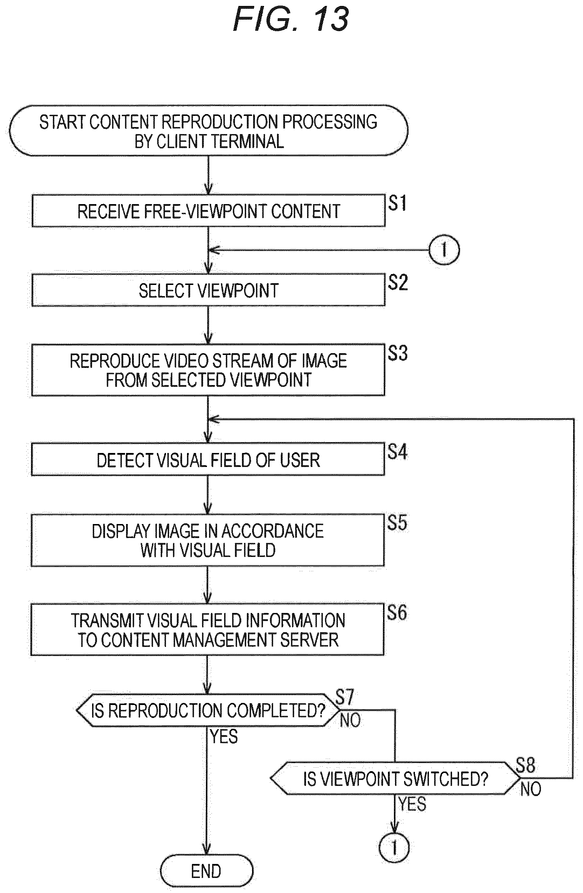

First, processing by the client terminal when reproducing the free-viewpoint content will be described with reference to a flowchart in Fig. 13. Although the description here assumes that the HMD 2-1 carries out the processing, similar processing is carried out in the HMDs 2-2 and 2-3 or the portable terminal 3 as well.

The processing in Fig. 13 is started when, for example, the free-viewpoint content selected by the user of the HMD 2-1 is transmitted from the content management server 1. For example, a menu screen displayed on the display 74 of the HMD 2-1 is used to select the free-viewpoint content.

At step S1, the communication unit 72 of the HMD 2-1 receives the free-viewpoint content transmitted from the content management server 1. The free-viewpoint content may be configured to be transmitted in a streaming approach, or alternatively, transmitted in a download approach. Data of the free-viewpoint content is supplied to the control unit 71.

At step S2, the reproducing unit 91 selects the viewpoint in accordance with the operation by the user. For example, the viewpoint may be configured to be selected on a menu screen on which a list of the viewpoints is displayed, or alternatively, selected through predetermined operation while the free-viewpoint content is viewed.

At step S3, the reproducing unit 91 reproduces the video stream of the image from the viewpoint selected by the user. Data of the image obtained by reproducing the video stream is successively supplied to the display control unit 92.

At step S4, the visual field detection unit 93 detects the visual field of the user on the basis of the sensor data supplied from the sensor 73. The information on the viewpoint, the direction of the line of sight, and the angle of view, which indicates the visual field detected by the visual field detection unit 93, is supplied to the display control unit 92 and the visual field information management unit 94.

At step S5, the display control unit 92 displays the image in accordance with the visual field detected by the visual field detection unit 93. Specifically, out of the entire image that can be viewed from the viewpoint selected by the user, the display control unit 92 displays a portion of a range of the image on the display 74 in accordance with the visual field of the user.

At step S6, the visual field information management unit 94 transmits, to the content management server 1, the visual field information indicating the visual field detected by the visual field detection unit 93.

At step S7, the reproducing unit 91 judges whether the reproduction is completed. When it is judged at step S7 that the reproduction is not completed, the reproducing unit 91 judges at step S8 on the basis of the operation of the user whether the viewpoint is switched.

When it is judged at step S8 that the viewpoint is not switched, the processing returns to step S4 and the subsequent processing is repeated. The visual field of the user is repeatedly detected on the basis of the sensor data such that the display range of the image is switched in accordance with the visual field.

When it is judged at step S8 that the viewpoint is to be switched, the processing returns to step S2 and, after the viewpoint is switched, the subsequent processing is repeated.

Meanwhile, when it is judged at step S7 that the reproduction is completed for such a reason that the free-viewpoint content has been reproduced to the end, the reproducing unit 91 terminates the processing.

The above-described processing is carried out at the respective client terminals that have received the delivery of the free-viewpoint content. The free-viewpoint content is viewed at the respective client terminals and at the same time, the information indicating the visual field at each time point is repeatedly transmitted to the content management server 1 therefrom.

In the above description, the visual field information has been assumed to be repeatedly transmitted while the free-viewpoint content is reproduced. Compared to this, the time series visual field information representing a time series of all of the visual fields detected during the reproduction may be configured to be collectively transmitted after the reproduction of the free-viewpoint content is completed.

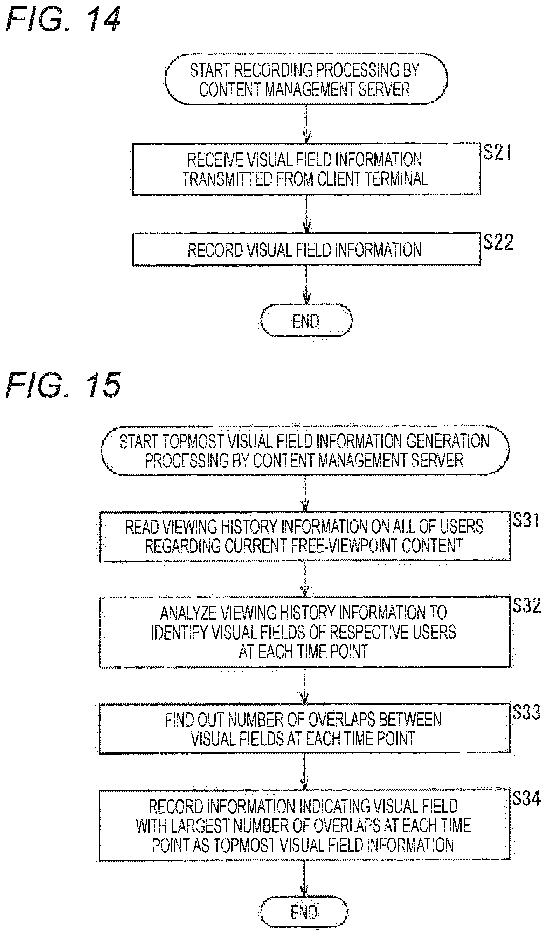

Next, processing by the content management server 1 when recording the viewing history information will be described with reference to a flowchart in Fig. 14.

At step S21, the communication control unit 41 of the content management server 1 receives the visual field information transmitted from the client terminal.

At step S22, the viewing history information recording unit 42 causes the viewing history information recording unit 42 itself to record the received visual field information in such a manner that this visual field information is added to the time series visual field information on the free-viewpoint content viewed at the client terminal that has transmitted that viewing information. Thereafter, the processing is terminated.

The above-described processing is carried out every time the visual field information is transmitted from the client terminal. In a case where the free-viewpoint content including a real-time image is being delivered, information indicating the real-time visual field at each of the client terminals is recorded to the viewing history information recording unit 42.

Next, processing by the content management server 1 when generating the topmost visual field information will be described with reference to a flowchart in Fig. 15.

As described with reference to Fig. 10, the topmost visual field information is included in the content information on each free-viewpoint content. For example, the processing in Fig. 15 is carried out every time the visual field information is added through the processing in Fig. 14.

At step S31, the highlight point identification unit 44 reads, from the viewing history information recording unit 42, the viewing history information on all of the users regarding the free-viewpoint content for which the topmost visual field information is to be generated.

At step S32, the highlight point identification unit 44 analyzes the time series visual field information included in the viewing history information that has been read and then identifies the visual fields of the respective users at each time point while the free-viewpoint content is viewed.

At step S33, the highlight point identification unit 44 finds out the number of overlaps between the visual fields at each time point on the basis of the identified visual fields.

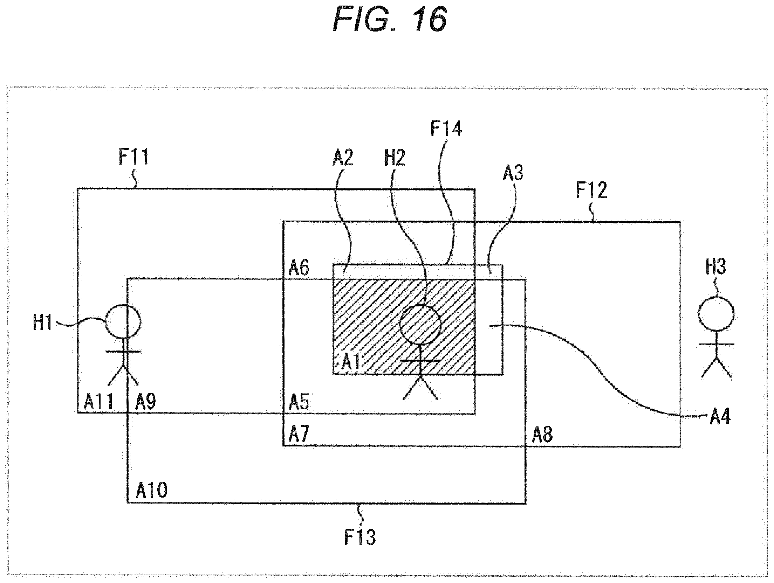

Fig. 16 is a diagram illustrating an example of the overlaps between the visual fields.

Fig. 16 illustrates the persons H1 to H3 and the visual fields (display ranges) of the users of four client terminals at a predetermined time point while the free-viewpoint content is reproduced when the image from a predetermined viewpoint is developed on a flat surface.

Respective rectangular frames F11 to F14 represent the display ranges of the client terminals. The display ranges of the client terminals are located at positions different from one another in accordance with the attitudes of the heads of the users and also have sizes different from one another in accordance with the performance of displays.

For example, a portion of the person H1 is included on the left side of the frame F11 and the person H2 is included on the right side thereof. This case represents that the user is viewing the free-viewpoint content with such a visual field including the person H1 on the left side of the frame F11 and the person H2 on the right side thereof.

A region A1 indicated by a shade is a region where the frame F11 to F14 overlap. The number of overlaps between the visual fields is four in the region A1.

A laterally long rectangular region A2 located on an upper side of the region A1 is a region where the frames F11, F12, and F14 overlap and accordingly, the number of overlaps between the visual fields is three therein. Meanwhile, a small rectangular region A3 located at the upper right of the region A1 is a region where the frames F12 and F14 overlap and accordingly, the number of overlaps between the visual fields is two therein. The number of overlaps between the visual fields is found out similarly for regions A4 to A11 as well. Only the visual field having a certain overlapping area or larger may be configured to be processed as the overlapping visual field.

Returning to the description of Fig. 15, at step S34, the highlight point identification unit 44 identifies the visual field with the largest number of overlaps at each time point. The highlight point identification unit 44 records information indicating the identified visual field to the content information recording unit 43 as the topmost visual field information on the free-viewpoint content currently handled. At the timing illustrated in Fig. 16, the region A1 in which the number of overlaps between visual fields is four is identified as the visual field with the largest number of overlaps and information indicating the direction, the size, and so on of the region A1 is recorded.

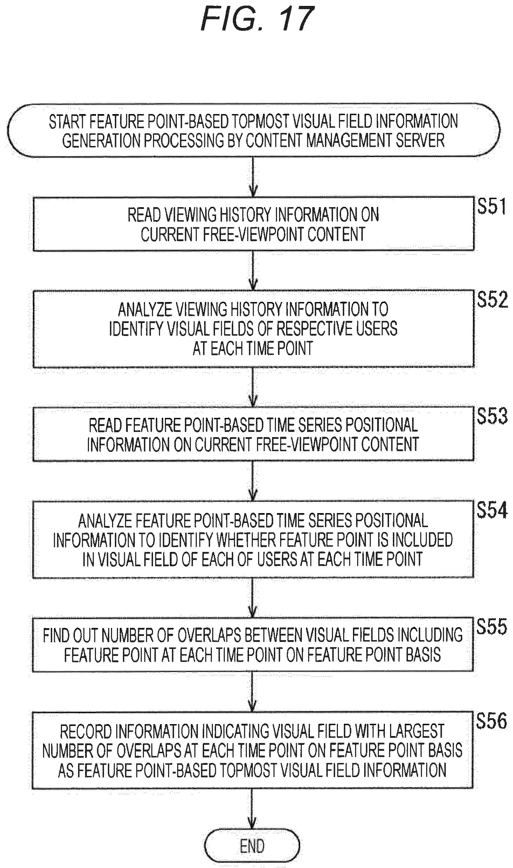

Next, processing by the content management server 1 when generating the feature point-based topmost visual field information will be described with reference to a flowchart in Fig. 17. For example, the processing in Fig. 17 is also carried out every time the visual field information is added.

At step S51, the highlight point identification unit 44 reads, from the viewing history information recording unit 42, the viewing history information on all of the users regarding the free-viewpoint content for which the feature point-based topmost visual field information is to be generated.

At step S52, the highlight point identification unit 44 analyzes the time series visual field information included in the viewing history information that has been read and then identifies the visual fields of the respective users at each time point while the free-viewpoint content is viewed.

At step S53, the highlight point identification unit 44 reads, from the content information recording unit 43, the feature point-based time series positional information prepared in advance as the content information regarding the current free-viewpoint content.

At step S54, the highlight point identification unit 44 analyzes the feature point-based time series positional information and then identifies, on a feature point basis, whether the feature point is included in the visual field identified at step S52, namely, the visual field of each of the users at each time point. The feature point-based time series positional information is information indicating the position of each of the feature points at each time point.

At step S55, the highlight point identification unit 44 finds out the number of overlaps between the visual fields including the feature point at each time point on a feature point basis.

For example, in a case where the respective faces of the persons H1 to H3 in Fig. 2 are set as the feature points and the positions thereof at each time point are indicated by the feature point-based time series positional information, whether the face of each of the persons H1 to H3 is included in the visual field of each of the users at each time point is identified. In addition, by paying attention to the visual fields including the feature points, the number of overlaps between the visual fields including the face of the person H1, the number of overlaps between the visual fields including the face of the person H2, and the number of overlaps between the visual fields including the face of the person H3 are individually found out for each time point.

At step S56, the highlight point identification unit 44 records information indicating the visual field with the largest number of overlaps to the content information recording unit 43 on a feature point basis as the feature point-based topmost visual field information on the free-viewpoint content currently handled. Respective pieces of information indicating the visual field including the face of the person H1 with the largest number of overlaps, the visual field including the face of the person H2 with the largest number of overlaps, and the visual field including the face of the person H3 with the largest number of overlaps are recorded for each time point.

As described above, the topmost visual field information and the feature point-based topmost visual field information are updated every time the visual field information is added. The highlight content is generated on the basis of the latest topmost visual field information and the latest feature point-based topmost visual field information.

### • Delivery Processing of Highlight Content

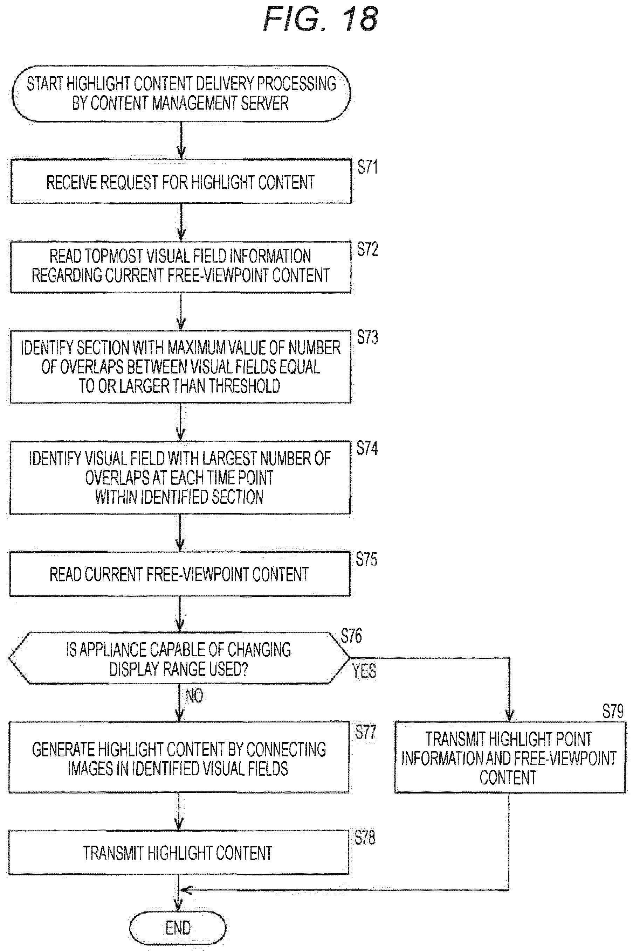

Next, processing by the content management server 1 when delivering the highlight content will be described with reference to a flowchart in Fig. 18.

The processing in Fig. 18 is processing for delivering the highlight content generated on the basis of the topmost visual field information. For example, the processing in Fig. 18 is started when the transmission of the highlight content is requested from a predetermined client terminal.

At step S71, the communication control unit 41 receives a request transmitted from the client terminal. For example, information specifying the free-viewpoint content from which the highlight content is generated and information indicating the specifications of the client terminal are included in the request transmitted from the client terminal.

In the information indicating the specifications of the client terminal, whether the client terminal requesting the transmission of the highlight content is an appliance capable of changing the display range in accordance with the attitude thereof as well as the angle of view of a display included in the client terminal and so on are indicated. The information received by the communication control unit 41 is supplied to the highlight point identification unit 44 and the delivery image generation unit 45.

At step S72, the highlight point identification unit 44 reads, from the content information recording unit 43, the topmost visual field information regarding the free-viewpoint content for which the highlight point is to be generated.

At step S73, on the basis of the topmost visual field information, the highlight point identification unit 44 identifies a section (time period) with a maximum value of the number of overlaps between the visual fields equal to or larger than a threshold. A section with a large maximum value of the number of overlaps between the visual fields can be deemed as a section during which many users pay attention to the same object. In contrast to this, a section with a small maximum value of the number of overlaps between the visual fields can be deemed as a section during which the visual fields of the users are separated to a plurality of objects.

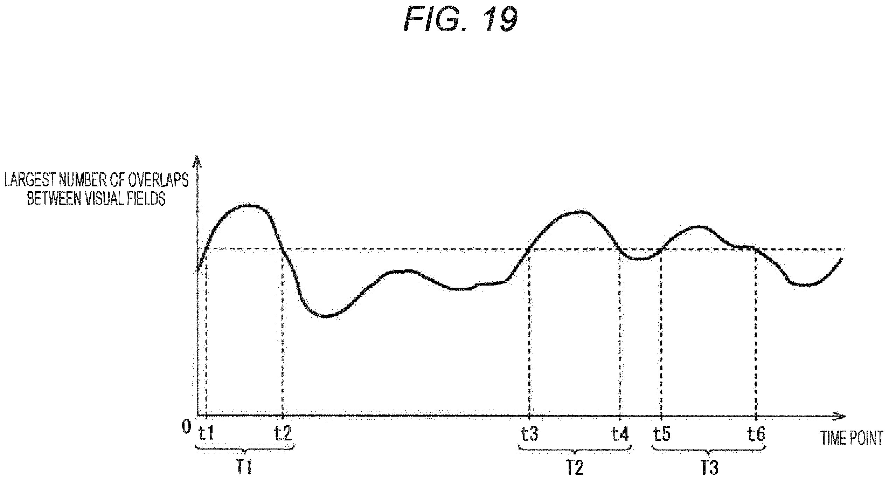

Fig. 19 is a diagram illustrating a time series of the maximum values of the number of overlaps between the visual fields.

A horizontal axis in Fig. 19 represents a time point in the free-viewpoint content, whereas a vertical axis therein represents the maximum value of the number of overlaps between the visual fields. A dashed line in the horizontal direction represents the largest number of overlaps serving the threshold.

In the example in Fig. 19, each of a section T1 from a time point t1 to a time point t2, a section T2 from a time point t3 to a time point t4, and a section T3 from a time point t5 to a time point t6 is assumed as the section with the maximum value of the number of overlaps between the visual fields equal to or larger than the threshold. The highlight point identification unit 44 identifies the sections T1 to T3 as the sections of attention.

The threshold serving as a determination reference for the section of attention is variable. The highlight point identification unit 44 sets the threshold in accordance with a time of the highlight content to be transmitted and then identifies the section of attention.

At step S74 in Fig. 18, on the basis of the topmost visual field information, the highlight point identification unit 44 identifies the visual field with the largest number of overlaps at each time point within the section of attention. The topmost visual field information is information indicating the visual field with the largest number of overlaps at each time point. The highlight point identification unit 44 outputs, to the delivery image generation unit 45, information regarding the highlight point, specifically, the visual field with the largest number of overlaps at each time point within the section of attention.

At step S75, the delivery image generation unit 45 reads the current free-viewpoint content from the content recording unit 46.

At step S76, the delivery image generation unit 45 judges whether the client terminal requesting the highlight content is an appliance capable of switching the display range in accordance with the attitude of the appliance and so on. Whether to be the appliance capable of switching the display range is indicated by the information received at step S71, which indicates the specifications of the client terminal.

When it is judged at step S76 that the client terminal is not the appliance capable of switching the display range, the delivery image generation unit 45 generates the highlight content constituted by the images of the highlight points out of the image of the free-viewpoint content.

For example, at a time point when the overlaps between the visual fields are in the state illustrated in Fig. 16, a certain range of the image including the visual field indicated by the region A1 with the largest number of overlaps is cut out to be used in the generation of the highlight content. The delivery image generation unit 45 determines the range of the image to be cut out in accordance with, for example, the angle of view of the display included in the client terminal to which the highlight content is to be transmitted. The delivery image generation unit 45 outputs the generated highlight content to the communication control unit 41.

At step S78, the communication control unit 41 transmits the highlight content generated by the delivery image generation unit 45 to the client terminal and then terminates the processing.

At the client terminal such as the television receiver 4, the highlight content is reproduced to display the image in the visual field with the largest number of overlaps within the section with the maximum value of the number of overlaps between the visual fields equal to or larger than the threshold.

On the other hand, when it is judged at step S76 that the client terminal is the appliance capable of switching the display range, at step S79, the delivery image generation unit 45 outputs, to the communication control unit 41, highlight point information and the free-viewpoint content read from the content recording unit 46. The highlight point information is information indicating the highlight point identified by the highlight point identification unit 44. The communication control unit 41 transmits the highlight point information and the free-viewpoint content to the client terminal and then terminates the processing.

At the client terminal such as the HMD 2-1, the free-viewpoint content is reproduced and, while the display range is controlled on the basis of the highlight point information, the image in the visual field with the largest number of overlaps within the section with the maximum value of the number of overlaps between the visual fields equal to or larger than the threshold is displayed.

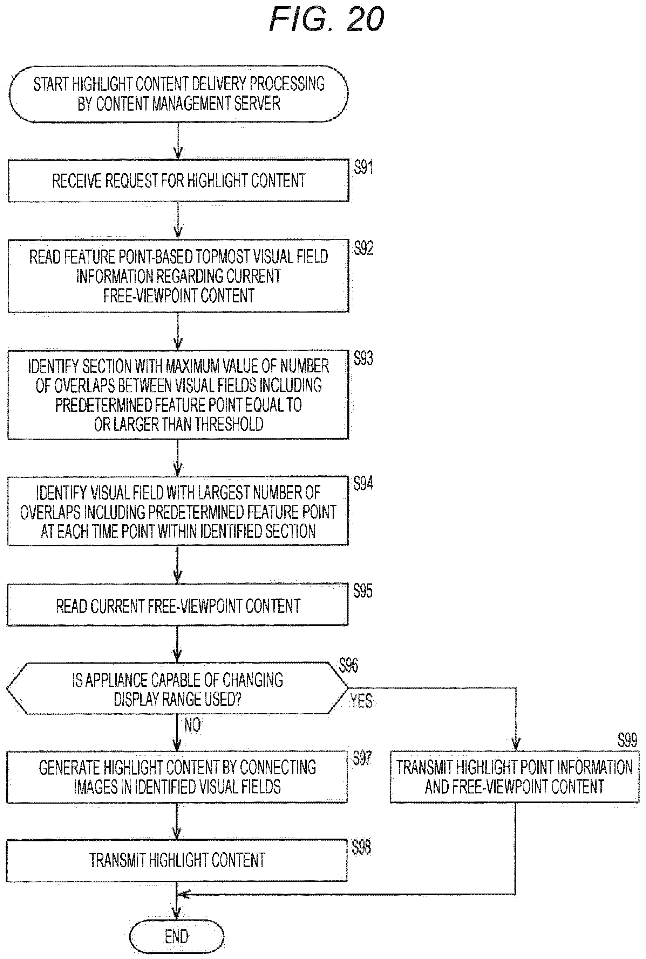

Next, other processing by the content management server 1 when delivering the highlight content will be described with reference to a flowchart in Fig. 20.

The processing in Fig. 20 is processing for delivering the highlight content generated on the basis of the feature point-based topmost visual field information. The processing in Fig. 20 is processing fundamentally similar to the processing described with reference to Fig. 18 except that information used in the generation of the highlight content is the feature point-based topmost visual field information instead of the topmost visual field information. Duplicated description will be omitted as appropriate.

At step S91, the communication control unit 41 receives a request transmitted from the client terminal. The information specifying the free-viewpoint content, the information indicating the specifications of the client terminal, and information specifying the feature point to which the attention is to be paid are included in the request for the highlight content transmitted from the client terminal. The information received by the communication control unit 41 is supplied to the highlight point identification unit 44 and the delivery image generation unit 45.

At step S92, the highlight point identification unit 44 reads, from the content information recording unit 43, the feature point-based topmost visual field information on the current free-viewpoint content.

At step S93, on the basis of the feature point-based topmost visual field information, the highlight point identification unit 44 identifies a section with the maximum value of the number of overlaps between the visual fields including the feature point selected by the user of the client terminal equal to or larger than the threshold.

At step S94, on the basis of the feature point-based topmost visual field information, the highlight point identification unit 44 identifies the visual field with the largest number of overlaps at each time point within the section of attention from among the visual fields including the feature point selected by the user of the client terminal. The highlight point identification unit 44 outputs, to the delivery image generation unit 45, information regarding the highlight point, specifically, the visual field including the predetermined feature point with the largest number of overlaps at each time point within the section of attention.

At step S95, the delivery image generation unit 45 reads the current free-viewpoint content from the content recording unit 46.

At step S96, the delivery image generation unit 45 judges whether the client terminal requesting the highlight content is an appliance capable of switching the display range.

When it is judged at step S96 that the client terminal is not the appliance capable of switching the display range, at step S97, the delivery image generation unit 45 generates the highlight content constituted by the images of the highlight points.

At step S98, the communication control unit 41 transmits the highlight content generated by the delivery image generation unit 45 to the client terminal and then terminates the processing.

On the other hand, when it is judged at step S96 that the client terminal is the appliance capable of switching the display range, at step S99, the delivery image generation unit 45 outputs the highlight point information and the free-viewpoint content to the communication control unit 41. The communication control unit 41 transmits the highlight point information and the free-viewpoint content to the client terminal and then terminates the processing.

As described above, the information transmitted from the content management server 1 to the client terminal is switched depending on whether the client terminal is an appliance capable of switching the display range or an appliance incapable of switching the display range.

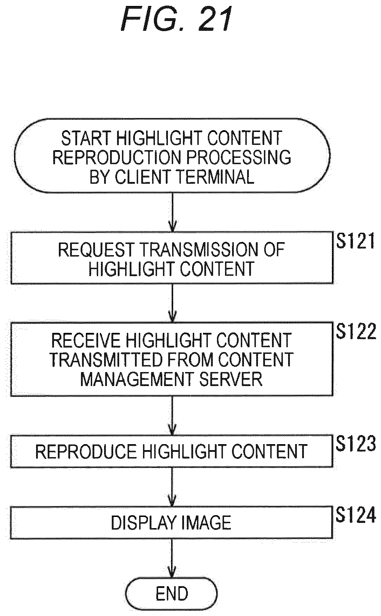

Next, processing by the client terminal when reproducing the highlight content will be described with reference to a flowchart in Fig. 21.

The processing in Fig. 21 is processing carried out in response to the processing in Fig. 18 or Fig. 20. The processing in Fig. 21 is carried out by, for example, the television receiver 4 incapable of changing the display range in accordance with the attitude thereof.

At step S121, the control unit 71 (Fig. 11) of the television receiver 4 controls the communication unit 72 to transmit information for requesting the transmission of the highlight content to the content management server 1.

The information specifying the free-viewpoint content and the information indicating the specifications of the television receiver 4 are included in the information transmitted by the television receiver 4. The information indicating the specifications of the television receiver 4 is information indicating that the television receiver 4 is not an appliance capable of changing the display range in accordance with the attitude thereof as well as indicating the angle of view of the display 74 included in the television receiver 4, and so on.

In addition, in a case where the user has selected to view the highlight content including a predetermined feature point, the information specifying the feature point selected by the user is also included in the information transmitted by the television receiver 4.

When the feature point is not selected, the processing in Fig. 18 is carried out at the content management server 1 and then, the highlight content is transmitted. On the other hand, when the feature point is selected, the processing in Fig. 20 is carried out at the content management server 1 and then, the highlight content constituted by the images in the visual fields including the predetermined feature point is transmitted.

At step S122, the communication unit 72 receives the highlight content transmitted from the content management server 1.

At step S123, the reproducing unit 91 reproduces the highlight content.

At step S124, the display control unit 92 displays the image of the highlight content on the display 74. For example, the image in the visual field with the largest number of overlaps within the section with the maximum value of the number of overlaps between the visual fields equal to or larger than the threshold is displayed on the display 74. When the reproduction of the highlight content is completed, the processing is terminated.

The user of the television receiver 4 can view the image in the visual field frequently watched by other users within the time period frequently watched by other users.

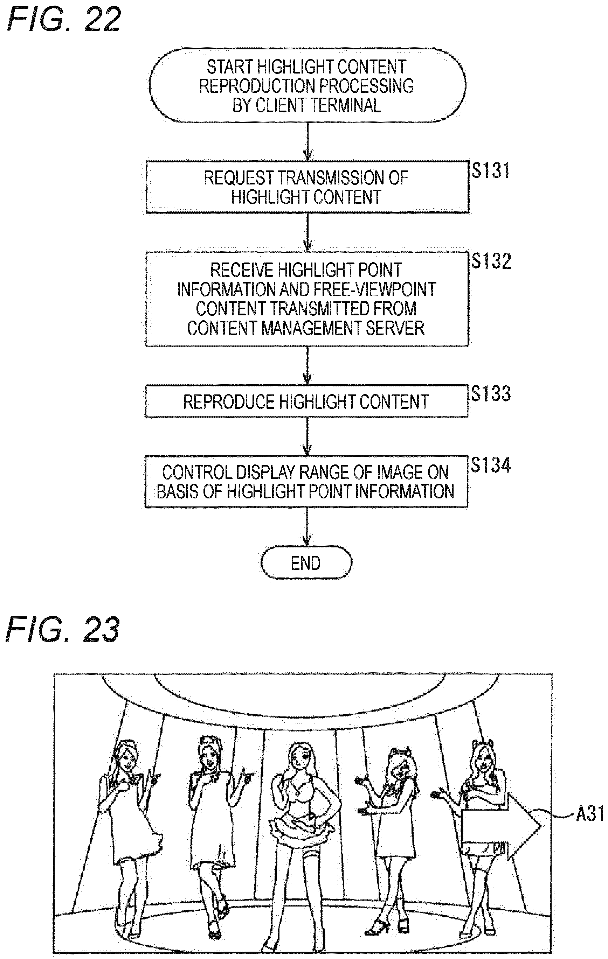

Next, processing by the client terminal when reproducing the highlight content will be described with reference to a flowchart in Fig. 22.

The processing in Fig. 22 is also processing carried out in response to the processing in Fig. 18 or Fig. 20. The processing in Fig. 22 is carried out by an appliance capable of changing the display range in accordance with the attitude thereof, for example, the portable terminal 3.

At step S131, the control unit 71 (Fig. 11) of the portable terminal 3 controls the communication unit 72 to transmit information for requesting the transmission of the highlight content to the content management server 1.

The information specifying the free-viewpoint content and the information indicating the specifications of the portable terminal 3 are included in the information transmitted by the portable terminal 3. The information indicating the specifications of the portable terminal 3 is information indicating that the portable terminal 3 is an appliance capable of changing the display range in accordance with the attitude thereof as well as indicating the angle of view of the display 74 included in the portable terminal 3, and so on.

In addition, in a case where the user has selected to view the highlight content including a predetermined feature point, the information specifying the feature point selected by the user is also included in the information transmitted by the portable terminal 3.

At step S132, the communication unit 72 receives the highlight point information and the free-viewpoint content transmitted from the content management server 1.

At step S133, the reproducing unit 91 reproduces the free-viewpoint content.

At step S134, the display control unit 92 displays the image in the visual field specified as the highlight point on the display 74 out of the entire image obtained by reproducing the free-viewpoint content. For example, the image in the visual field with the largest number of overlaps within the section with the maximum value of the number of overlaps between the visual fields equal to or larger than the threshold is displayed on the display 74. When the reproduction of the highlight content is completed, the processing is terminated.

The user of the portable terminal 3 can view the image in the visual field frequently watched by other users within the time period frequently watched by other users. The display range of the image may be configured to be arbitrarily selected by the user such that the display range is shifted off a range of the highlight point when the orientation of the portable terminal 3 is changed.

Through a series of the processing described above, while the free-viewpoint content is viewed, the user of the client terminal no longer hesitates to decide where to pay attention to view and can watch the image through the viewpoint and the visual field similar to those of many other users. Additionally, when the feature point is specified, the image through the viewpoint and the visual field to which the attention is paid by many other users can be watched as an image through the viewpoint and the visual field including the specified feature point.

The topmost visual field information or the feature point-based topmost visual field information used in the generation of the highlight content is information updated every time the visual field information is added. The user can watch the image through the viewpoint and the visual field used by other users to watch at a point in time when the highlight content is viewed.

The above description has assumed that the visual field with the largest number of overlaps within the section with the maximum value of the number of overlaps between the visual fields equal to or larger than the threshold is identified as the highlight point. Compared to this, only the section may be configured to be identified. In this case, the highlight content is accordingly constituted by the images in all of the visual fields within the section with the maximum value of the number of overlaps between the visual fields equal to or larger than the threshold.

### «Second Embodiment»

It is also possible to present the direction of the highlight point and so on while the free-viewpoint content is reproduced. A user of, for example, an HMD 2-1 can watch the image of the highlight point by changing the orientation of the face in line with information displayed on top of the image being viewed such that the visual field is switched.

Fig. 23 is a diagram illustrating exemplary presentation of the highlight point.

For example, the image illustrated in Fig. 23 is an image viewed by the user of the HMD 2-1. The image of the free-viewpoint content is displayed on a display 74 of the HMD 2-1 in accordance with the visual field of the user.

An arrow picture A31 displayed on top of the image in Fig. 23 serves as information indicating the direction of the highlight point when the direction of the image being viewed is assumed as a reference. When the face is turned to the right in line with the arrow picture A31 to change the visual field, the image of the highlight point selected by a content management server 1 is displayed on the display 74 of the HMD 2-1. When the visual field of the user matches the highlight point, information indicating this fact may be configured to be displayed.

When the highlight point is presented, the highlight point information indicating the highlight point identified by the content management server 1 is transmitted to the client terminal from the content management server 1 along with the free-viewpoint content.

### <Actions of Respective Appliances>

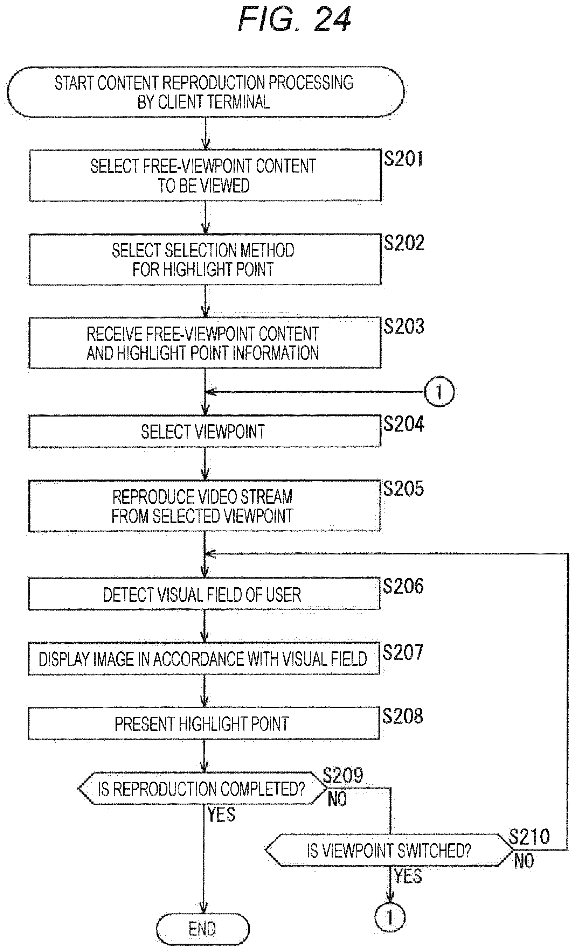

Processing by the client terminal when reproducing the free-viewpoint content will be described with reference to a flowchart in Fig. 24.

The description here assumes that the HMD 2-1 carries out the processing. Similar processing is carried out also in HMDs 2-2 and 2-3 or a portable terminal 3.

At step S201, a control unit 71 selects the free-viewpoint content to be viewed in accordance with the operation of the user.

At step S202, the control unit 71 selects an identification method for the highlight point in accordance with the operation of the user.

As will be described later, a plurality of methods is prepared as the identification method for the highlight point. The highlight point is to be identified at the content management server 1 in line with a method selected by the user. Information specifying the identification method selected by the user is transmitted to the content management server 1 from the HMD 2-1.

In the content management server 1, the highlight point of the free-viewpoint content selected by the user of the HMD 2-1 is identified in line with the method selected by the user of the HMD 2-1. The highlight point information is transmitted to the HMD 2-1 along with the free-viewpoint content. Processing by the content management server 1 when identifying the highlight point will be described later.

At step S203, a communication unit 72 receives the free-viewpoint content and the highlight point information transmitted from the content management server 1.

At step S204, a reproducing unit 91 selects the viewpoint in accordance with the operation by the user.

At step S205, the reproducing unit 91 reproduces the video stream of the image from the viewpoint selected by the user. Data of the image obtained by reproducing the video stream is successively supplied to a display control unit 92.

At step S206, a visual field detection unit 93 detects the visual field of the user on the basis of the sensor data supplied from a sensor 73.

At step S207, the display control unit 92 displays the image in accordance with the visual field detected by the visual field detection unit 93.

At step S208, on the basis of the highlight point information, the display control unit 92 identifies the direction of the highlight point when the direction of the visual field during viewing is assumed as a reference. The display control unit 92 displays the information indicating the direction of the highlight point on top of the image of the free-viewpoint content.

At step S209, the reproducing unit 91 judges whether the reproduction is completed. When it is judged at step S209 that the reproduction is not completed, the reproducing unit 91 judges at step S210 whether the viewpoint is switched.

When it is judged at step S210 that the viewpoint is not switched, the processing returns to step S206 and the subsequent processing is carried out. The display range of the image is repeatedly switched in accordance with the visual field of the user, while the direction of the highlight point is also repeatedly presented.

When it is judged at step S210 that the viewpoint is to be switched, the processing returns to step S204 and, after the viewpoint is switched, the subsequent processing is repeated.

Meanwhile, when it is judged at step S209 that the reproduction is completed, the reproducing unit 91 terminates the processing.

By changing the visual field in line with a guide displayed while the free-viewpoint content is viewed, the user can watch the image of the highlight point identified through the method selected by him/herself.

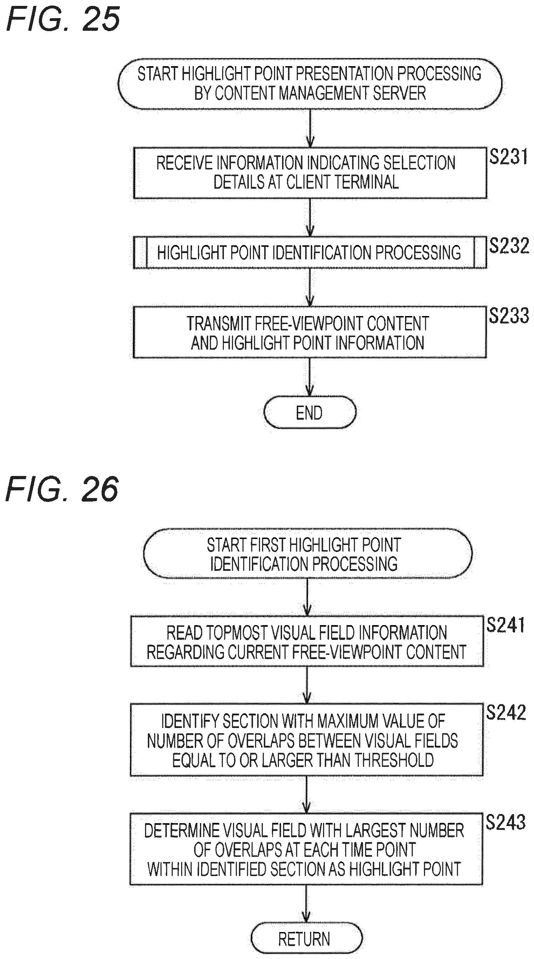

Next, processing by the content management server 1 when presenting the highlight point will be described with reference to a flowchart in Fig. 25.

The processing in Fig. 25 is started when information indicating the free-viewpoint content to be viewed and the identification method for the highlight point is transmitted from the client terminal such as the HMD 2-1.

At step S231, a communication control unit 41 of the content management server 1 receives information indicating selection details transmitted from the HMD 2-1. The received information is supplied to a highlight point identification unit 44 and a delivery image generation unit 45.

At step S232, the highlight point identification unit 44 carries out highlight point identification processing. Details of the highlight point identification processing are switched in line with the identification method selected by the user of the HMD 2-1. The highlight point identification processing will be described later with reference to flowcharts in Fig. 26 to Fig. 30.

The highlight point identification unit 44 outputs, to the communication control unit 41, the highlight point information indicating the highlight point identified through the highlight point identification processing. A delivery image generation unit 45 reads the free-viewpoint content selected by the user from a content recording unit 46 to output to the communication control unit 41.

At step S233, the communication control unit 41 transmits, to the HMD 2-1, the free-viewpoint content supplied from the delivery image generation unit 45 and the highlight point information supplied from the highlight point identification unit 44 and then terminates the processing.

### • First Highlight Point Identification Processing

Next, first highlight point identification processing carried out at step S232 in Fig. 25 will be described with reference to the flowchart in Fig. 26.

The first highlight point identification processing is processing that identifies, as the highlight point, the visual field with the largest number of overlaps at each time point within the section with the maximum value of the number of overlaps between the visual fields equal to or larger than a threshold.

At step S241, the highlight point identification unit 44 reads, from a content information recording unit 43, the topmost visual field information on the free-viewpoint content for which the highlight content is to be generated.

At step S242, on the basis of the topmost visual field information, the highlight point identification unit 44 identifies the section with the maximum value of the number of overlaps between the visual fields equal to or larger than the threshold.

At step S243, on the basis of the topmost visual field information, the highlight point identification unit 44 identifies the visual field with the largest number of overlaps at each time point within the identified section of attention. The highlight point identification unit 44 outputs, to the communication control unit 41, the highlight point information indicating the visual field with the largest number of overlaps at each time point within the section of attention.

Thereafter, the processing returns to step S232 in Fig. 25 and the subsequent processing is carried out. While the section with the maximum value of the number of overlaps between the visual fields equal to or larger than the threshold is reproduced at the HMD 2-1, the information indicating the direction of the highlight point is displayed on top of the image.

The user of the HMD 2-1 can view the image of the highlight point by changing the visual field in line with the presented information. The highlight point is an image in the visual field viewed by many users within a section viewed by many users. The user of the HMD 2-1 can watch the image in the visual field same as that of many users and consequently, is no longer troubled in deciding which visual field should be used to watch the image.

### • Second Highlight Point Identification Processing

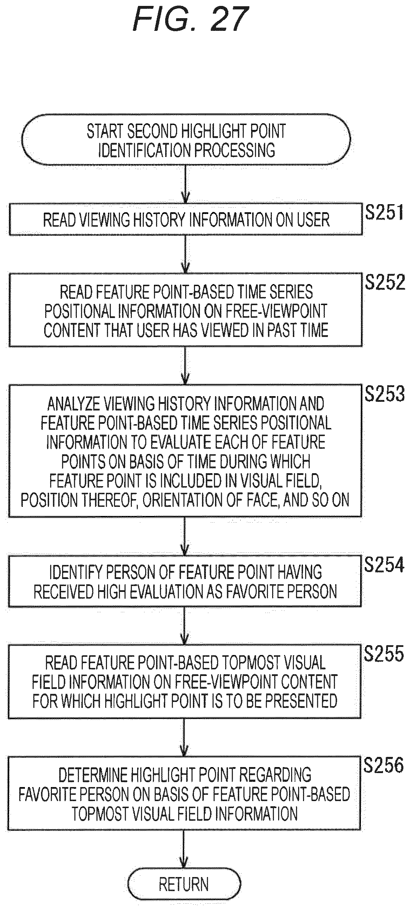

Next, second highlight point identification processing carried out at step S232 in Fig. 25 will be described with reference to the flowchart in Fig. 27.

The second highlight point identification processing is processing that identifies a favorite person of the user and then identifies, as the highlight point, the visual field in which the identified person appears frequently. The free-viewpoint content selected as an object to be viewed is assumed as content in which a favorite person of the user appears.

At step S251, the highlight point identification unit 44 reads the viewing history information on the user of the HMD 2-1 from a viewing history information recording unit 42.

At step S252, the highlight point identification unit 44 identifies the viewed free-viewpoint content the user has viewed in the past on the basis of the viewing history information and then reads the feature point-based time series positional information on the identified free-viewpoint content from the content information recording unit 43.

At step S253, the highlight point identification unit 44 analyzes the viewing history information and the feature point-based time series positional information on each item of the free-viewpoint content and then identifies, on a feature point basis, whether the feature point has been included in the visual field of the user. The highlight point identification unit 44 also identifies, on a feature point basis, a time during which the feature point is included in the visual field, the position thereof within the visual field, the orientation of the face while the feature point is included in the visual field, and so on such that each of the feature points is evaluated.

As described above, the feature point-based time series positional information is information indicating the position and the rotation direction of each of the feature points appearing on the image of the free-viewpoint content within the imaging space at each time point. When the feature point is overlaid on the visual field of the user indicated by the viewing history information, it is made possible to identify, on a feature point basis, a time during which the feature point is included in the visual field, the position thereof within the visual field, the orientation of the face while the feature point is included in the visual field, and so on.

For example, the highlight point identification unit 44 sets a higher evaluation to the feature point that has been included in the visual field for a long time than the feature point that has been included in the visual field for a short time. The highlight point identification unit 44 also sets a higher evaluation to the feature point appearing at the vicinity of the center of the visual field than the feature point appearing at an edge of the visual field. The highlight point identification unit 44 sets a higher evaluation to the feature point appearing in the visual field while the user looks to the front than the feature point appearing in the visual field while the user looks in a direction other than the front.

At step S254, the highlight point identification unit 44 identifies a person of the feature point having received the highest evaluation as the favorite person of the user.

At step S255, the highlight point identification unit 44 reads, from the content information recording unit 43, the feature point-based topmost visual field information on the free-viewpoint content for which the highlight point is to be presented.

At step S256, on the basis of the feature point-based topmost visual field information, the highlight point identification unit 44 identifies, as the highlight point, the visual field with the largest number of overlaps, in which the favorite person of the user appears. The highlight point identification unit 44 outputs the highlight point information indicating the identified highlight point to the communication control unit 41.

Thereafter, the processing returns to step S232 in Fig. 25 and the subsequent processing is carried out. The free-viewpoint content is reproduced at the HMD 2-1 and the information indicating the direction of the highlight point at which the favorite person of the user appears is displayed on top of the image of the free-viewpoint content.

By changing the visual field in line with the presented information, the user of the HMD 2-1 can watch the image in the visual field viewed by many users as an image in the visual field in which his/her favorite person appears.

### • Third Highlight Point Identification Processing

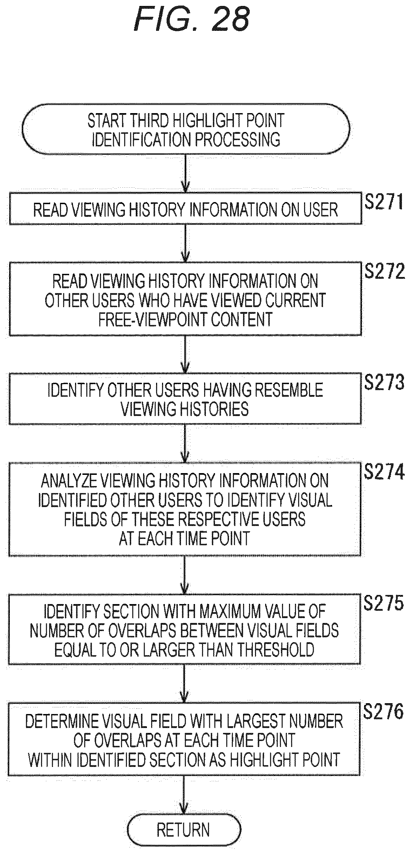

Next, third highlight point identification processing carried out at step S232 in Fig. 25 will be described with reference to the flowchart in Fig. 28.

The third highlight point identification processing is processing that identifies other users having viewing histories similar to that of the user of the HMD 2-1 who is to receive the presentation of the highlight point and then identifies the visual field frequently viewed by these other users as the highlight point.

At step S271, the highlight point identification unit 44 reads the viewing history information on the user of the HMD 2-1 from the viewing history information recording unit 42.

At step S272, the highlight point identification unit 44 reads, from the viewing history information recording unit 42, the viewing history information on other users who have viewed, in the past, the free-viewpoint content same as the free-viewpoint content to be exhibited to the user of the HMD 2-1.

At step S273, on the basis of the viewing history information on the user of the HMD 2-1 and the viewing history information read at step S272, the highlight point identification unit 44 identifies other users having the viewing histories resembling that of the user of the HMD 2-1. For example, the highlight point identification unit 44 identifies, as other users having the resembling viewing histories, users who have viewed a predetermined number of items or more of the free-viewpoint content same as the free-viewpoint content that the user of the HMD 2-1 has viewed in the past.

At step S274, out of the viewing history information on these other users identified at step S273, the highlight point identification unit 44 analyzes the viewing history information regarding the free-viewpoint content to be exhibited to the user of the HMD 2-1. The highlight point identification unit 44 analyzes the viewing history information to identify the visual fields of these respective other users at each time point.

At step S275, the number of overlaps between the identified visual fields at each time point is found out and then, the section with the maximum value of the number of overlaps equal to or larger than the threshold is identified.

At step S276, the highlight point identification unit 44 identifies, as the highlight point, the visual field with the largest number of overlaps at each time point within the identified section of attention. The highlight point identification unit 44 outputs the highlight point information indicating the identified highlight point to the communication control unit 41.

Thereafter, the processing returns to step S232 in Fig. 25 and the subsequent processing is carried out. While the section is reproduced at the HMD 2-1, in which section the maximum value of the number of overlaps between the visual fields of the users having the resembling viewing histories is equal to or larger than the threshold, the information indicating the direction of the highlight point is displayed on top of the image.

By changing the visual field in line with the presented information, the user of the HMD 2-1 can view the image in the visual field same as that of other users having the resembling viewing histories. The image that has been viewed by other users having the resembling viewing histories has a strong possibility of being an image that attracts the interest of the user of the HMD 2-1. It is made possible for the user of the HMD 2-1 to view the image he/she is interested in.

### • Fourth Highlight Point Identification Processing

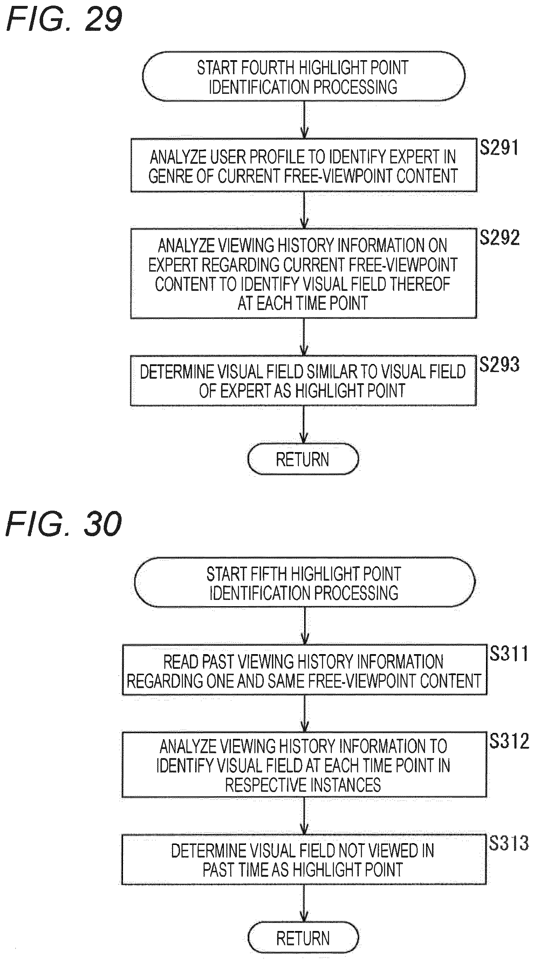

Next, fourth highlight point identification processing carried out at step S232 in Fig. 25 will be described with reference to the flowchart in Fig. 29.

The fourth highlight point identification processing is processing that identifies another user knowledgeable about a genre of the free-viewpoint content to be viewed by the user of the HMD 2-1 and then identifies the visual field of the another user as the highlight point.

At step S291, the highlight point identification unit 44 analyzes the user profile information recorded in the viewing history information recording unit 42 and then identifies a user deemed as an expert in the genre of the free-viewpoint content to be exhibited to the user of the HMD 2-1. For example, the user profile information included in the viewing history information on all of the users is analyzed regarding the free-viewpoint content same as the free-viewpoint content to be exhibited to the user of the HMD 2-1.

In a case where the free-viewpoint content to be exhibited to the user of the HMD 2-1 is content of a concert of an idol group, a user who is an expert knowledgeable about that idol group is identified. The user profile information includes information such as a field of expertise of each of the users as well.

At step S292, out of the viewing history information on the predetermined expert that has been identified, the highlight point identification unit 44 analyzes the viewing history information on the free-viewpoint content to be exhibited to the user of the HMD 2-1, thereby identifying the visual field of that expert at each time point.

At step S293, the highlight point identification unit 44 identifies the visual field same as the visual field of the expert as the highlight point and then outputs the highlight point information to the communication control unit 41.

Thereafter, the processing returns to step S232 in Fig. 25 and the subsequent processing is carried out. The free-viewpoint content is reproduced at the HMD 2-1 and the information indicating the direction of the highlight point is displayed.

By changing the visual field in line with the presented information, the user of the HMD 2-1 can watch the free-viewpoint content being viewed through the visual field same as the visual field of the expert of that genre.

Instead of identifying the expert through the analysis of the user profile information, a user serving as the expert may be configured to be determined in advance. When the content management server 1 generates the plurality of pieces of the highlight point information regarding one and the same item of the free-viewpoint content in advance on the basis of the visual fields of the plurality of experts, a service such as presenting the highlight point indicating the visual field of a predetermined expert selected by the user of the HMD 2-1 can be also realized.

### • Fifth Highlight Point Identification Processing

Next, fifth highlight point identification processing carried out at step S232 in Fig. 25 will be described with reference to the flowchart in Fig. 30.

The fifth highlight point identification processing is processing that identifies, as the highlight point, the visual field that has not been viewed yet in a case where the user of the HMD 2-1 has viewed one and the same item of the free-viewpoint content a plurality of times.

At step S311, out of the viewing history information on the user of the HMD 2-1, the highlight point identification unit 44 reads, from the viewing history information recording unit 42, the past viewing history information regarding the free-viewpoint content same as the free-viewpoint content to be exhibited to the user of the HMD 2-1 this time. For example, when the free-viewpoint content is to be viewed this time for fifth time, the viewing history information generated through the past four times of viewing is read.

At step S312, the highlight point identification unit 44 analyzes the viewing history information that has been read and then identifies the visual field at each time point in the respective times of viewing.

At step S313, the highlight point identification unit 44 identifies, as the highlight point, the visual field not viewed in the past at each time point and then outputs the highlight point information to the communication control unit 41.

Thereafter, the processing returns to step S232 in Fig. 25 and the subsequent processing is carried out. The free-viewpoint content is reproduced at the HMD 2-1 and the information indicating the direction of the highlight point is displayed on top of the image of the free-viewpoint content.

By changing the visual field in line with the presented information, the user of the HMD 2-1 can watch the image in the visual field that has not been watched yet.

As described thus far, the highlight point can be identified through the various methods. As in a case where the highlight point is identified on the basis of the viewing history information at a point in time when the free-viewpoint content is viewed during a certain time period at a certain place, the viewing history information used in the identification of the highlight point is extracted using various types of filter conditions, whereby the highlight point can be identified on the basis of the extracted viewing history information.

### <Variations>

### • About Presentation of Highlight Point

In the above description, the picture of the arrow has been assumed to be displayed on top of the image of the free-viewpoint content to indicate the direction of the highlight point. However, the information displayed on top of the image is not limited to the picture of the arrow.

In addition, instead of the presentation by way of the display of the information, the direction of the highlight point may be presented by controlling the volume or a sound field of audio of the free-viewpoint content output from the speaker 76 of the HMD 2-1. For example, by assuming the position of the visual field being viewed as a reference, the volume or the sound field of the audio is controlled such that a sound is heard from the direction of the highlight point.

Furthermore, the highlight point may be configured to be presented by adjusting the degree of tightness at a belt portion of the HMD 2-1 being in contact with the head of the user. For example, by assuming the position of the visual field being viewed as a reference, the degree of tightness at the belt portion is adjusted such that the user looks to the direction of the highlight point unconsciously.

### • Forms of HMD

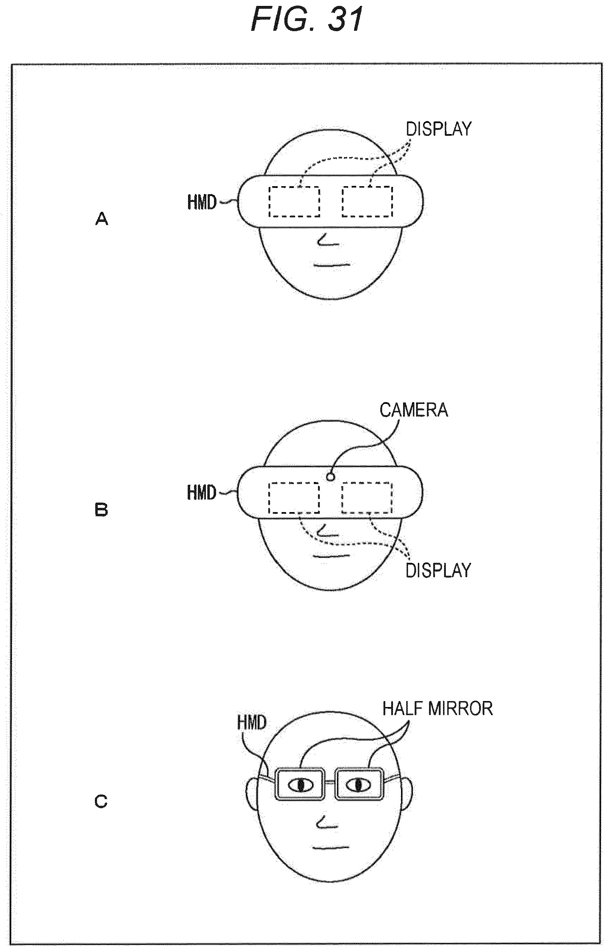

In the description, the HMDs 2-1 to 2-3 have been assumed as the immersive HMDs as illustrated in A of Fig. 31. However, the present technology can be applied to a so-called video see-through HMD or optical see-through HMD as well.

As illustrated in B of Fig. 31, the video see-through HMD is the same as the immersive HMD in that the display is provided at a position where the image is projected in front of the eye of the user wearing a main body thereof, while being different therefrom in that a camera is provided in a cabinet of the HMD such that an image of a scene ahead of the user captured with the camera is displayed on the display.

As illustrated in C of Fig. 31, the optical see-through HMD is an HMD provided with a half mirror in front of the eye of the user wearing the HMD such that the user can watch a scene ahead thereof through the half mirror. Light of various types of information such as the image of the free-viewpoint content output from a light emitting unit provided at a frame portion of the HMD or the like is reflected at the half mirror to be guided to the eye of the user. The user can watch the various types of information on top of the scene in front of the eye.

### • About Program

A series of the above-described processing can be carried out by hardware as well and also can be carried out by software. When the series of the processing is carried out by software, a program constituting the software is installed in a computer built into dedicated hardware, a general-purpose personal computer, and so on from a program recording medium.

The program to be installed is provided by being recorded in the removable medium 31 illustrated in Fig. 7, which is constituted by an optical disc (e.g., a compact disc-read only memory (CD-ROM) and a digital versatile disc (DVD)), a semiconductor memory, and the like. In addition, the provision thereof may be configured to be made through a wired or wireless transmission medium such as a local area network, the Internet, or digital broadcasting. The program can be installed to the ROM 22 or the recording unit 28 in advance.

Note that, the program executed by the computer may be a program in which the processing is carried out along the time series in accordance with the order described in the present description, or alternatively, may be a program in which the processing is carried out in parallel or at a necessary timing, for example, when called.

Meanwhile, in the present description, the system refers to a collection of a plurality of constituent members (e.g., devices and modules (components)) and whether all the constituent members are arranged within the same cabinet is not regarded as important. Therefore, a plurality of devices accommodated in separate cabinets so as to be connected to one another through a network and one device of which a plurality of modules is accommodated within one cabinet are both deemed as systems.

In addition, the effects described in the present description merely serve as examples and not construed to be limited. There may be another effect as well.

The embodiments according to the present technology are not limited to the aforementioned embodiments and various modifications can be made without departing from the scope of the present technology.

### <Exemplary Combinations of Configurations>

The present technology can be also configured as described below.
(1) An information processing device including:
   a communication unit that receives viewing history information including a history of a display range of each video content while being viewed, which viewing history information is transmitted from a plurality of display devices each configured to display an image of the video content in which the display range is switched within a range of the entire image by following a movement of a user; and
   an identification unit that identifies, on the basis of the history of the display range of the image of the video content at the predetermined display device, a predetermined display range of the video content within a predetermined time period thereof as a range of attention.
(2) The information processing device according to the aforementioned (1), in which
   the video content is content constituted by an image with an angle of view of 360 degrees in at least one of a horizontal direction and a vertical direction.
(3) The information processing device according to the aforementioned (2), in which
   the video content is content including a plurality of images obtained by capturing one and the same object from a plurality of positions, in which one position of the plurality of positions is selectable as a viewpoint while the video content is viewed.
(4) The information processing device according to the aforementioned (2), in which
   the video content is content obtained by combining a plurality of images obtained by capturing one and the same object from a plurality of positions, in which an arbitrary position is selectable as a viewpoint while the video content is viewed.
(5) The information processing device according to any one of the aforementioned (1) to (4), further including a generation unit that generates content of attention, which is constituted by an image within the range of attention, in which
   the communication unit transmits the content of attention to the display device.
(6) The information processing device according to the aforementioned (5), in which
   on the basis of the viewing history information on a plurality of users, the identification unit identifies, as the range of attention, the display range with the largest number of overlaps between the display ranges within a time period with a maximum value of the number of overlaps between the display ranges equal to or larger than a threshold.
(7) The information processing device according to any one of the aforementioned (1) to (4), in which
   the communication unit transmits information indicating the range of attention and the video content to the display device, and
   the range of attention is presented at the display device while the video content is viewed.
(8) The information processing device according to the aforementioned (7), in which
   on the basis of the viewing history information on a plurality of users, the identification unit identifies, as the range of attention, the display range with the largest number of overlaps between the display ranges within a time period with a maximum value of the number of overlaps between the display ranges equal to or larger than a threshold.
(9) The information processing device according to the aforementioned (7), in which
   the identification unit selects a predetermined feature point included in the display range indicated by the viewing history information on a user for whom the range of attention is to be presented and, on the basis of the viewing history information on users of the plurality of display devices, identifies, as the range of attention, the display range with the largest number of overlaps between the display ranges including the predetermined feature point within a time period with a maximum value of the number of overlaps between the display ranges including the predetermined feature point equal to or larger than a threshold.
(10) The information processing device according to the aforementioned (7), in which
   on the basis of the viewing history information on a plurality of users, the identification unit selects other users who have viewed the video content resembling the video content having been viewed by a user for whom the range of attention is to be presented and, on the basis of the viewing history information on the aforementioned other users regarding the video content for which the range of attention is to be presented, identifies, as the range of attention, the display range with the largest number of overlaps between the display ranges within a time period with a maximum value of the number of overlaps between the display ranges equal to or larger than a threshold.
(11) The information processing device according to the aforementioned (7), in which
   on the basis of the viewing history information on another user than a user for whom the range of attention is to be presented regarding the video content for which the range of attention is to be presented, the identification unit identifies, as the range of attention, the display range same as the display range of the another user during viewing.
(12) The information processing device according to the aforementioned (7), in which
   on the basis of the viewing history information on a user for whom the range of attention is to be presented regarding the video content for which the range of attention is to be presented, the identification unit identifies, as the range of attention, the display range different from the display range of the user for whom the range of attention is to be presented during viewing.
(13) An information processing method including steps of:
   receiving, by a receiver of an information processing device, viewing history information including a history of a display range of each video content while being viewed, which viewing history information is transmitted from a plurality of display devices each configured to display an image of the video content in which the display range is switched within a range of the entire image by following a movement of a user; and
   identifying, by an identification unit of the information processing device, a predetermined display range of the video content within a predetermined time period thereof as a range of attention, on the basis of the history of the display range of the image of the video content at the predetermined display device.
(14) A program that causes a computer to carry out processing including steps of:
   receiving viewing history information including a history of a display range of each video content while being viewed, which viewing history information is transmitted from a plurality of display devices each configured to display an image of the video content in which the display range is switched within a range of the entire image by following a movement of a user; and
   identifying, on the basis of the history of the display range of the image of the video content at the predetermined display device, a predetermined display range of the video content within a predetermined time period thereof as a range of attention.
(15) A display device including:
   a reproducing unit that reproduces video content in which a display range is switched within a range of the entire image by following a movement of a user;
   a detection unit that detects the movement of the user while viewing the video content;
   a display control unit that controls the display range of an image by following the movement of the user; and
   a communication unit that transmits viewing history information including a history of the display range of the video content while being viewed to an information processing device configured to process the viewing history information transmitted from the plurality of display devices and, on the basis of the history of the display range of the image of the video content at the predetermined display device, identify a predetermined display range of the video content within a predetermined time period thereof as a range of attention.
(16) The display device according to the aforementioned (15), in which
   the communication unit receives content of attention constituted by an image of the range of attention serving as the display range with the largest number of overlaps between the display ranges within a time period with a maximum value of the number of overlaps between the display ranges equal to or larger than a threshold, which content has been generated by the information processing device on the basis of the viewing history information on a plurality of users and then transmitted from the information processing device, and
   the reproducing unit reproduces the content of attention.
(17) The display device according to the aforementioned (15), in which
   the communication unit receives information indicating the range of attention and the video content transmitted from the information processing device, and
   the display control unit displays the information indicating the range of attention on top of the image of the video content.
(18) An information processing method including steps of:
   reproducing video content in which a display range is switched within a range of the entire image by following a movement of a user;
   detecting the movement of the user;
   controlling the display range of an image by following the movement of the user; and
   transmitting viewing history information including a history of the display range of the video content while being viewed to an information processing device configured to process the viewing history information transmitted from a plurality of display devices and, on the basis of the history of the display range of the image of the video content at the predetermined display device, identify a predetermined display range of the video content within a predetermined time period thereof as a range of attention.
(19) A program that causes a computer to carry out processing including steps of:
   reproducing video content in which a display range is switched within a range of the entire image by following a movement of a user;
   detecting the movement of the user;
   controlling the display range of an image by following the movement of the user; and
   transmitting viewing history information including a history of the display range of the video content while being viewed to an information processing device configured to process the viewing history information transmitted from a plurality of display devices and, on the basis of the history of the display range of the image of the video content at the predetermined display device, identify a predetermined display range of the video content within a predetermined time period thereof as a range of attention.
(20) An information processing system constituted by:
   a display device including:
      a reproducing unit that reproduces video content in which a display range is switched within a range of the entire image by following a movement of a user;
      a detection unit that detects the movement of the user while viewing the video content;
      a display control unit that controls the display range of an image by following the movement of the user; and
      a communication unit that transmits viewing history information including a history of the display range of the video content while being viewed to an information processing device; and
      an information processing device including:
         a communication unit that receives the viewing history information transmitted from the plurality of display devices; and
         an identification unit that identifies, on the basis of the history of the display range of the image of the video content at the predetermined display device, a predetermined display range of the video content within a predetermined time period thereof as a range of attention.

### REFERENCE SIGNS LIST

- 1: Content management server
- 2-1 to 2-3: HMD
- 3: Portable terminal
- 4: Television receiver
- 41: Communication control unit
- 42: Viewing history information recording unit
- 43: Content information recording unit
- 44: Highlight point identification unit
- 45: Delivery image generation unit
- 46: Content recording unit
- 91: Reproducing unit
- 92: Display control unit
- 93: Visual field detection unit
- 94: Visual field information management unit

## Claims

1. An information processing device comprising:
a communication unit that receives viewing history information including a history of a display range of each video content while being viewed, which viewing history information is transmitted from a plurality of display devices each configured to display an image of the video content in which the display range is switched within a range of the entire image by following a movement of a user; and
an identification unit that identifies, on the basis of the history of the display range of the image of the video content at the predetermined display device, a predetermined display range of the video content within a predetermined time period thereof as a range of attention.

2. The information processing device according to claim 1, wherein
the video content is content constituted by an image with an angle of view of 360 degrees in at least one of a horizontal direction and a vertical direction.

3. The information processing device according to claim 2, wherein
the video content is content including a plurality of images obtained by capturing one and the same object from a plurality of positions, in which one position of the plurality of positions is selectable as a viewpoint while the video content is viewed.

4. The information processing device according to claim 2, wherein
the video content is content obtained by combining a plurality of images obtained by capturing one and the same object from a plurality of positions, in which an arbitrary position is selectable as a viewpoint while the video content is viewed.

5. The information processing device according to claim 1, further comprising a generation unit that generates content of attention, which is constituted by an image within the range of attention, wherein
the communication unit transmits the content of attention to the display device.

6. The information processing device according to claim 5, wherein
on the basis of the viewing history information on a plurality of users, the identification unit identifies, as the range of attention, the display range with the largest number of overlaps between the display ranges within a time period with a maximum value of the number of overlaps between the display ranges equal to or larger than a threshold.

7. The information processing device according to claim 1, wherein
the communication unit transmits information indicating the range of attention and the video content to the display device, and
the range of attention is presented at the display device while the video content is viewed.

8. The information processing device according to claim 7, wherein
on the basis of the viewing history information on a plurality of users, the identification unit identifies, as the range of attention, the display range with the largest number of overlaps between the display ranges within a time period with a maximum value of the number of overlaps between the display ranges equal to or larger than a threshold.

9. The information processing device according to claim 7, wherein
the identification unit selects a predetermined feature point included in the display range indicated by the viewing history information on a user for whom the range of attention is to be presented and, on the basis of the viewing history information on users of the plurality of display devices, identifies, as the range of attention, the display range with the largest number of overlaps between the display ranges including the predetermined feature point within a time period with a maximum value of the number of overlaps between the display ranges including the predetermined feature point equal to or larger than a threshold.

10. The information processing device according to claim 7, wherein
on the basis of the viewing history information on a plurality of users, the identification unit selects other users who have viewed the video content resembling the video content having been viewed by a user for whom the range of attention is to be presented and, on the basis of the viewing history information on the aforementioned other users regarding the video content for which the range of attention is to be presented, identifies, as the range of attention, the display range with the largest number of overlaps between the display ranges within a time period with a maximum value of the number of overlaps between the display ranges equal to or larger than a threshold.

11. The information processing device according to claim 7, wherein
on the basis of the viewing history information on another user than a user for whom the range of attention is to be presented regarding the video content for which the range of attention is to be presented, the identification unit identifies, as the range of attention, the display range same as the display range of the another user during viewing.

12. The information processing device according to claim 7, wherein
on the basis of the viewing history information on a user for whom the range of attention is to be presented regarding the video content for which the range of attention is to be presented, the identification unit identifies, as the range of attention, the display range different from the display range of the user for whom the range of attention is to be presented during viewing.

13. An information processing method comprising steps of:
receiving, by a receiver of an information processing device, viewing history information including a history of a display range of each video content while being viewed, which viewing history information is transmitted from a plurality of display devices each configured to display an image of the video content in which the display range is switched within a range of the entire image by following a movement of a user; and
identifying, by an identification unit of the information processing device, a predetermined display range of the video content within a predetermined time period thereof as a range of attention, on the basis of the history of the display range of the image of the video content at the predetermined display device.

14. A program that causes a computer to carry out processing comprising steps of:
receiving viewing history information including a history of a display range of each video content while being viewed, which viewing history information is transmitted from a plurality of display devices each configured to display an image of the video content in which the display range is switched within a range of the entire image by following a movement of a user; and
identifying, on the basis of the history of the display range of the image of the video content at the predetermined display device, a predetermined display range of the video content within a predetermined time period thereof as a range of attention.

15. A display device comprising:
a reproducing unit that reproduces video content in which a display range is switched within a range of the entire image by following a movement of a user;
a detection unit that detects the movement of the user while viewing the video content;
a display control unit that controls the display range of an image by following the movement of the user; and
a communication unit that transmits viewing history information including a history of the display range of the video content while being viewed to an information processing device configured to process the viewing history information transmitted from the plurality of display devices and, on the basis of the history of the display range of the image of the video content at the predetermined display device, identify a predetermined display range of the video content within a predetermined time period thereof as a range of attention.

16. The display device according to claim 15, wherein
the communication unit receives content of attention constituted by an image of the range of attention serving as the display range with the largest number of overlaps between the display ranges within a time period with a maximum value of the number of overlaps between the display ranges equal to or larger than a threshold, which content has been generated by the information processing device on the basis of the viewing history information on a plurality of users and then transmitted from the information processing device, and
the reproducing unit reproduces the content of attention.

17. The display device according to claim 15, wherein
the communication unit receives information indicating the range of attention and the video content transmitted from the information processing device, and
the display control unit displays the information indicating the range of attention on top of the image of the video content.

18. An information processing method comprising steps of:
reproducing video content in which a display range is switched within a range of the entire image by following a movement of a user;
detecting the movement of the user;
controlling the display range of an image by following the movement of the user; and
transmitting viewing history information including a history of the display range of the video content while being viewed to an information processing device configured to process the viewing history information transmitted from a plurality of display devices and, on the basis of the history of the display range of the image of the video content at the predetermined display device, identify a predetermined display range of the video content within a predetermined time period thereof as a range of attention.

19. A program that causes a computer to carry out processing comprising steps of:
reproducing video content in which a display range is switched within a range of the entire image by following a movement of a user;
detecting the movement of the user;
controlling the display range of an image by following the movement of the user; and
transmitting viewing history information including a history of the display range of the video content while being viewed to an information processing device configured to process the viewing history information transmitted from a plurality of display devices and, on the basis of the history of the display range of the image of the video content at the predetermined display device, identify a predetermined display range of the video content within a predetermined time period thereof as a range of attention.

20. An information processing system constituted by:
a display device comprising:
a reproducing unit that reproduces video content in which a display range is switched within a range of the entire image by following a movement of a user;
a detection unit that detects the movement of the user while viewing the video content;
a display control unit that controls the display range of an image by following the movement of the user; and
a communication unit that transmits viewing history information including a history of the display range of the video content while being viewed to an information processing device; and
an information processing device comprising:
a communication unit that receives the viewing history information transmitted from the plurality of display devices; and
an identification unit that identifies, on the basis of the history of the display range of the image of the video content at the predetermined display device, a predetermined display range of the video content within a predetermined time period thereof as a range of attention.
